(19) Europäisches Patentamt

European Patent Office

Office européen des brevets

(11) **EP 0 968 912 A2**

(12) **EUROPEAN PATENT APPLICATION**

(43) Date of publication:
05.01.2000 Bulletin 2000/01

(51) Int. Cl.⁷: **B62M 23/02**

(21) Application number: **99112419.9**

(22) Date of filing: **29.06.1999**

(84) Designated Contracting States:
**AT BE CH CY DE DK ES FI FR GB GR IE IT LI LU MC NL PT SE**
Designated Extension States:
**AL LT LV MK RO SI**

(30) Priority: **29.06.1998 JP 18197798**
**29.03.1999 JP 8726399**

(71) Applicant:
**YAMAHA HATSUDOKI KABUSHIKI KAISHA
Iwata-shi Shizuoka-ken (JP)**

(72) Inventor:
**Makino, Satoshi,
c/o Yamaha Hatsudoki K. K.
Iwata-Shi, Shizuoka-ken (JP)**

(74) Representative:
**Grünecker, Kinkeldey,
Stockmair & Schwanhäusser
Anwaltssozietät
Maximilianstrasse 58
80538 München (DE)**

(54) **Electric motor-assisted vehicle**

(57) An electric motor-assisted vehicle wherein motor power is controlled according to the magnitude of human power detected with human power detecting means and the vehicle body is driven by human power and motor power: An input member (2) rotated by human power and an output member (3) connectable to a driving wheel are arranged on the same axial line and interconnected through elastic members (4). The human power detecting means (11) is constituted such that a pair of planetary mechanisms (12,13) of the same constitution are connected to the input member (2) and to the output member (3), and the phase difference between the two members (2,3) is detetected with a rotation angle detecting sensor (14).

FIG. 3

EP 0 968 912 A2

**Description**

This invention relates to an electric motor-assisted vehicle wherein motor power is controlled according to the magnitude of human power detected with human power detecting means and the vehicle body is driven by human power and motor power.

This type of electric motor-assisted vehicle has been disclosed, for example in a patent publication, a Japanese laid-open patent application No. Hei-9-183394. The electric motor-assisted vehicle disclosed in the publication is one in which the vehicle body is driven by the total of human power and motor power, and constituted that a pedal crankshaft in the human power train and a rotary member in the motor power train are connected to a resultant power shaft, and a resultant power of the pedal depressing power, or the human power, and the motor power corresponding to the human power is transmitted from the resultant power shaft through a chain to the rear wheel. The electric motor is controlled according to signals outputted from a human power detecting means detecting the human power.

The human power detecting means is constituted with a planetary mechanism interposed between the pedal crankshaft and the resultant power shaft, and a potentiometer for detecting the rotation of a component rotated by the reactional force produced as the pedal in the planetary gear mechanism is depressed. The planetary gear mechanism is constituted that a sun gear is connected to the resultant power shaft, a carrier for supporting the planetary gears is connected to the pedal crankshaft, and an outer circumferential gear is rotated by the reactional force against the repulsive force of a spring. The planetary gear mechanism is disposed nearly in the center of the vehicle width in a housing together with the resultant power shaft and others.

With the conventional motor-assisted vehicle constituted as described above, however, since the human power (pedaling power) is transmitted through the planetary gear mechanism to the resultant power shaft, every component of the planetary gear mechanism must be provided with a strength that can overcome the human power. To increase the strength, for example, every component is made of a material of a high rigidity, heat-treated, and the gears are made with greater widths and diameters. As a result, the conventional, motor-assisted vehicle has problems of increased size, weight and cost of the planetary gear mechanism for detecting the human power.

Another problem is that, since the planetary gear mechanism is located in about the center of the vehicle width, the work of mounting the mechanism on the vehicle body is hard.

Accordingly, it is an objective of the present invention to provide an electric motor-assisted vehicle as indicated above having a mechanism for detecting the human power which is compact and light-weight and producable with low costs and, in addition, facilitates the ease and the human power detecting mechanism on the vehicle body.

According to the present invention, this objective is solved for an electric motor-assisted vehicle as indicated above in that an input member rotated by human power and an output member connectable to a driving wheel are arranged on the same axial line and interconnected through elastic members, and that the human power detecting means is constituted such that a pair of planetary mechanisms of the same constitution are connected to the input member and to the output member, and the phase difference between the two members is detected with a rotation angle detecting sensor.

In addition, it is possible that components in three sets of the pair of planetary mechanisms comprising two sun wheels, two carriers for supporting planetary wheels, and two outer circumferential wheels, components in any one set are connected to the input member and to the output member either coaxially and integrally, or through gears of the same diameter, the rest of components in two sets, two components in one set are formed integrally so that the two components rotate at the same speed, and two components in the other set, one component is fixed related to the vehicle body and the other component is connected to the rotation angle detecting sensor.

According to an advantageous embodiment of the present invention human power is transmitted to a rear wheel through transmitting means using a belt, chain, or the like, disposed on one side in the vehicle width direction, the input member and the output member are disposed close to each other on the same one side as the transmitting means using a belt, chain, or the like, with the axes of both members directed in the vehicle width direction, and that the pair of planetary mechanisms are disposed in the vicinity of the input and output members with the axes of the planetary mechanisms directed in the vehicle width direction.

According to this invention, the human power is transmitted from the input member through the elastic members to the output member, and the pair of planetary mechanisms connected to the input and output members rotate as interlocked with those members. When the input member rotates in phase with the output member, no rotation is transmitted to the rotation angle detecting sensor. When the input member rotates out of phase of the output member, an amount of rotation commensurate with the phase difference is transmitted to the rotation angle detecting sensor, and an electric signal corresponding to the magnitude of the human power is outputted from the rotation angle detecting sensor.

Therefore, a great force for propelling the driving wheel is not transmitted to the planetary mechanism for detecting the human power. Thus, components of the planetary mechanism may be made with lower strengths than in the conventional arrangement.

According to another embodiment of the invention,

human power is transmitted to a rear wheel through transmitting means using a belt, chain, or the like, disposed on one side in the vehicle width direction,

an input member and an output member are disposed close to each other on the same one side as the transmitting means using a belt, chain, or the like, with the axes of both members directed in the vehicle width direction, and

a pair of planetary mechanisms are disposed in the vicinity of the input and output members with the axes of the planetary mechanisms directed in the vehicle width direction.

According to this invention, the transmitting means using a belt, chain, etc. and the components for detecting human power can be disposed on one same side of the vehicle width direction. The components for detecting human power, namely the input member and the output member , and the pair of planetary mechanisms can be collectively disposed on one side of the vehicle body.

In a further embodiment of the invention, the

elastic members are interposed between the input and out put members at positions nearly equally spaced from each other on a circle of a nearly constant radius, and

an annular rotation member for receiving a belt, chain, or the like of the transmitting means is attached to a position that is on one of the input and output members connected to the transmitting means and that is superimposed over the elastic member as seen in side view.

According to this invention, since the elastic members and the annular rotary member for receiving a belt, chain, or the like are aligned on the axial line of the input and output members, the axial directional position setting of the annular rotary member is not restricted by the radial positions of the elastic members on the input and output members. Also it is possible to utilize part of the space occupied by the input and output members to accommodate the elastic members.

According to a further embodiment of the invention,

the input and output members and the pair of planetary mechanisms are disposed with their axial lines parallel to each other, and

the input and output members are disposed apart from the planetary mechanisms in the direction at right angles to the axial lines.

According to this invention, since the input and output members are not located in the space for disposing the planetary mechanism, the diameter of the planetary mechanism is made smaller in comparison with the constitution in which the input and output members are disposed in the axial center area of the planetary mechanism.

An alternative solution for an above-mentioned electric motor-assisted vehicle is characterized in that

an input member rotated by human power and an output member connected to a driving wheel are arranged on the same axial line and interconnected through elastic members, and

the human power detecting means is constituted that a planetary mechanism is connected to the input and output members and the phase difference between the two members is detected with a rotation angle detecting sensor, one of three components of the planetary mechanism, namely one of a sun wheel, a carrier for supporting planetary wheels, and an outer circumferential wheel, is connected to the rotation angle detecting sensor, and

the rest of two components are connected respectively to the input and output members through two gears of different diameters.

According to this invention, the human power is transmitted from the input member through the elastic members to the output member, and the planetary mechanism connected to the input and output members rotates as interlocked with those members. The rotation angle detecting sensor detects the rotation angle corresponding to the phase difference between the input and output members.

Therefore, a great force for propelling the driving wheel is not transmitted to the planetary mechanism for detecting the human power. Thus, components of the planetary mechanism may be made with lower strengths than in the conventional arrangement. Moreover, the phase difference between the input and output members can be detected with a single planetary mechanism.

Other preferred embodiments of the present invention are laid down in further dependent claims.

In the following, the present invention is explained in greater detail with respect to several embodiments thereof in conjunction with the accompanying drawings, wherein:

FIG. 1. shows a constitution of a power unit for an electric motor-assisted bicycle;

FIG. 2 shows a constitution of another embodiment of a human power detecting means;

FIG. 3 shows a constitution of another embodiment of the human power detecting means;

FIG. 4 shows a constitution in plan view of another embodiment of the human power detecting means;

FIG. 5 is a side view as seen from the right of the vehicle body;

FIG. 6 is a cross-sectional view as seen along the line VI-VI in FIG. 5;

FIG. 7 is a cross-sectional view as seen along the line VII-VII in FIG. 5;

FIG. 8 is a side view of a carrier;

FIG. 9 shows a cross section as seen along the line IX-IX in FIG. 8;

FIG. 10 shows a cross section of the human power detecting means as mounted on a hanger pipe;

FIG. 11 shows the constitution of the human power detecting means as another embodiment;

FIG. 12 shows a cross section of the human power detecting means;

FIG. 13 is a side view as seen from the right of the vehicle;

FIG. 14 is a cross-sectional view showing the support structure for elastic members;

FIG. 15 shows a cross section as assembled to the hanger pipe;

FIG. 16 shows the constitution of the human power detecting means installed in a power unit for the electric motor-assisted bicycle;

FIG. 17 shows a constitution of the electric motor-assisted bicycle in another embodiment of the invention;

FIG. 18 shows a constitution of the electric motor-assisted bicycle in another embodiment of the invention; and

FIG. 19 shows a constitution of the electric motor-assisted bicycle in another embodiment of the invention.

## FIRST EMBODIMENT

An electric motor-assisted vehicle as a first embodiment of the invention will be hereinafter described. Here, a form of applying the invention to an electric motor-assisted bicycle is explained.

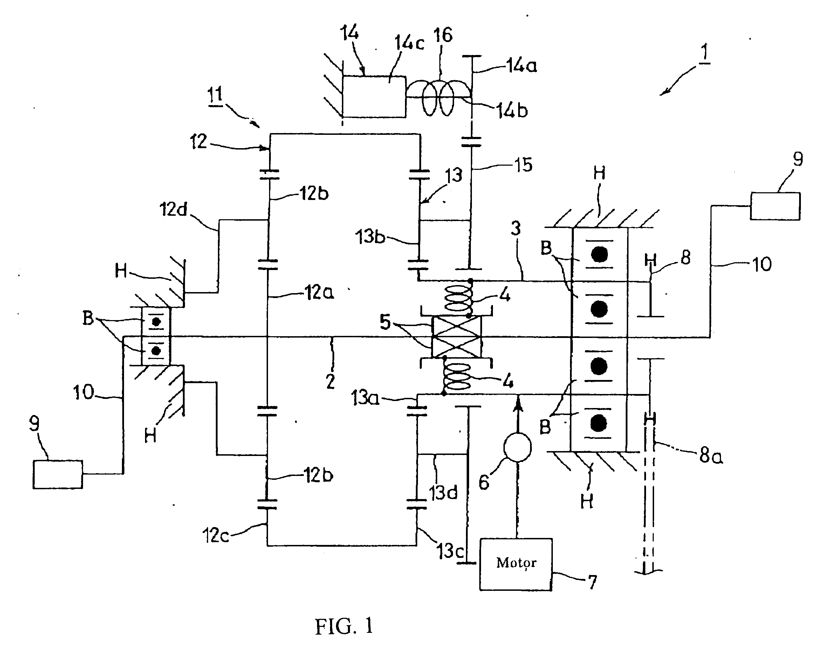

FIG. 1 shows a constitution of a power unit for an electric motor-assisted bicycle. In the figure, the part provided with a symbol 1 is the power unit for the electric motor-assisted bicycle of this embodiment. The power unit 1 is mounted on a hanger portion of the motor-assisted bicycle and is constituted that; a pedal crankshaft 2 is passed through a resultant power shaft 3. The shafts 2 and 3 are interconnected through elastic members 4 such as compression coil springs or torsion springs and a one-way clutch 5. The resultant power shaft 3 is connected to an electric motor 7 through a one-way clutch 6 and a transmission as a speed reducing mechanism (not shown). The pedal crankshaft 2 serves as the input member of this invention, and the resultant power shaft 3 as the output member.

The one-way clutch 5 interposed between the pedal crankshaft 2 and the resultant power shaft 3 is constituted to transmit power only in the direction from the pedal crankshaft 2 to the resultant power shaft 3. The one-way clutch 6 interposed between the motor 7 and the resultant power shaft 3 is constituted to transmit power only in the direction from the motor 7 to the resultant power shaft 3.

A motor drive train from the motor 7 through the one-way clutch 6 to the resultant power shaft 3 is constituted so that the rotating direction of the pedal crankshaft 2 when it is rotated to move the vehicle forward is the same as that of the resultant power shaft 3.

This embodiment is constituted so that the human power and the power of the motor 7 are joined together on the resultant power shaft 3 by interconnecting the pedal crankshaft 2 and the resultant power shaft 3 through the elastic members 4. A chain sprocket 8 is secured to the vehicle body outside end of the resultant power shaft 3. A chain 8a is routed around the chain sprocket 8 to transmit power from the power unit 1 to the rear, driving wheel (not shown). Incidentally, for transmitting the rotation of the resultant power shaft 3, a belt type of transmitting means may be used in place of the chain type transmitting means.

The pedal crankshaft 2 is supported for free rotation through bearings with a power unit housing H shown in FIG. 1 with its either end provided with a crank 10 having a pedal 9. Also, the resultant power shaft 3 through which the pedal crankshaft 2 passes is supported for free rotation through a bearing together with the pedal crankshaft 2 with the power unit housing H. In FIG. 1, the bearings for supporting the pedal crankshaft 2 and the resultant power shaft 3 are provided with symbols B.

The human power drive train of the electric motor-assisted vehicle is constituted with a number of components interposed between the pedal 9 to the rear wheel. That is, when the motor 7 is not rotating, the human power drive train is constituted with components including; the pedal 9, the crank 10, the pedal crankshaft 2, the elastic members 4, the resultant power shaft 3, the chain sprocket 8, the chain 8a, and a rear wheel hub to which the rotation is transmitted with the chain 8. On the other hand, when the motor 7 is rotating, the power of the motor 7 is applied to the resultant power shaft 3, and the human power (depressing power on the pedal 9) and the power of the motor 7 are joined together on the resultant power shaft 3. As a result, the rear wheel is driven by the resultant power consisting of the human power and the power of the motor 7 when the motor 7 is rotating.

The power of the motor 7 is controlled according to the magnitude of the human power. That is, the human power is detected with a human power detecting means 11 to be described later. The electric current supplied to the motor 7 is controlled according to signals outputted from the human power detecting means 11.

The human power detecting means 11 of this embodiment is constituted with a pair of planetary gear mechanisms 12, 13, and a rotation angle detecting sensor 14. The pair of planetary gear mechanisms 12, 13 are arranged so that the numbers of teeth of sun gears 12a, 13a are the same, and the numbers of teeth and the numbers of gears of planetary gears 12b, 13b are respectively the same, and the numbers of teeth of outer circumferential gears 12c, 13c are the same, and that both mechanisms 12, 13 are located on the same axial line as the pedal crankshaft 2 and the resultant power shaft 3. Incidentally, the components of the mechanisms 12, 13, namely the gears, support shafts, and planetary gears 12d, 13d, are made of light-weight, inexpensive materials such as plastic materials.

Of the three sets of components; the two sun gears 12a, 13a, the two carriers 12d, 13d for supporting the planetary gears, and the two outer circumferential gears 12c, 13c of the pair of planetary gear mechanisms 12, 13; the sun gear 12a is connected to the pedal crankshaft 2 and the sun gear 13a is connected to the resultant power shaft 3. That is, the sun gear 12a of the first planetary gear mechanism 12 located on the left in FIG. 1 is connected to the pedal crankshaft 2 and the sun gear of the other, second planetary gear mechanism 13 is connected to the resultant power shaft 3.

Of the three sets of components, the two outer circumferential gears 12c, 13c are formed in a single body so as to rotate together. Of the rest of the components, namely the carriers 12d, 13d for supporting the planetary gears, the carrier 12d is secured to the power unit housing H of the first planetary gear mechanism 12 so as not to rotate. The carrier 13d is provided with a gear 15 for the sensor. The sensor gear 15 meshes with the input gear 14a of the rotation angle detecting sensor 14.

The rotation angle detecting sensor 14 comprises a potentiometer for detecting the rotation of the input gear 14a, is supported with the power unit housing H, and is connected to a controller (not shown). The rotation angle detecting sensor 14 is provided with a return spring 16, or a torsion coil spring. The return spring 16 is resiliently interposed between the input gear 14a and the body 14c of the rotation angle detecting sensor 14 so as to urge the input gear 14a to rotate in one direction. When the return spring 16 is employed as described above, since the torque produced with the return spring is transmitted from the input gear 14a to the planetary gear mechanisms 12, 13, the planetary gear mechanisms 12, 13 need not be provided with springs for eliminating backlash in them.

The above-mentioned controller controls the power of the motor 7 according to the magnitude of the human power, and is constituted to determine the magnitude of the human power from the rotation angle of the input gear 14a (carrier 13d for supporting the planetary gears 13 of the second planetary gear mechanism), and outputs electric current commensurate with the human power magnitude to the motor 7.

With the power unit 1 constituted as described above, the pedal crankshaft 2 is rotated as the pedal 9 is depressed, and the rotation is transmitted through the one-way clutch 5 and the elastic members 4 to the resultant power shaft 3. When the motor 7 is at rest, only the human power is transmitted to the rear wheel through the chain sprocket 8 and the chain 8a. Once the motor 7 rotates, the rotation of the motor 7 is transmitted to the resultant power shaft 3, and the resultant power shaft 3 is rotated by both of the human power and the power of the motor 7.

When the pedal crankshaft 2 rotates, the sun gear 12a of the first planetary gear mechanism 12 also rotates as a single body with the pedal crankshaft 2. Along with the rotation, the planetary gear 12b of the first planetary gear mechanism 12 rotates about its own axis, because the carrier 12d for supporting the planetary gear is fixed to the power unit housing H. As a result, the rotation of the planetary gear 12b is transmitted to the outer circumferential gear 12c. At this time, also the sun gear 13a of the second planetary gear mechanism 13 rotates as interlocked with the resultant power shaft 3 to which rotation is transmitted from the pedal crankshaft 2.

That is to say, both of the planetary gear mechanisms 12, 13 rotate as interlocked with the pedal crankshaft 2 and the resultant power shaft 3. Since the numbers of teeth of components of both of the mechanisms are made the same each other, the mechanisms rotate in the same manner each other when the pedal crankshaft 2 rotates in phase with the resultant power shaft 3.

When the sun gears 12a, 13a rotate in the same phase each other, since all the paired gears rotate in the similar manner, the planetary gear 13b of the second planetary gear mechanism 13 makes only the rotation about its own axis. That is to say, at this time, since the carrier 13d for supporting the planetary gear of the second planetary gear mechanism 13 is at rest, no rotation is detected with the rotation angle detecting sensor 14, and no current is supplied to the motor.

During an uphill drive, acceleration, or when the depressing power on pedal 9 increases even during a constant speed drive, the pedal crankshaft 2, resisting the resilient force of the elastic member 4, advances in phase than the resultant power shaft 3. Accordingly, the first planetary gear mechanism 12 advances in phase than the second planetary gear mechanism 13. However, since the outer circumferential gears 12c, 13c are formed integrally each other, the outer circumferential gear 13c of the planetary gear 13 advances in phase and as a result, the planetary gear 13b rotates about its own axis and also revolves slightly about the pedal crankshaft 2.

At this time, the carrier 13d for supporting the planetary gears of the second planetary gear mechanism 13 rotates. The sensor gear 15 and the input gear 14a of the rotation angle detecting sensor 14 rotate as interlocked with the carrier 13d. That is, the rotation angle detecting sensor 14 detects the rotation corresponding to the magnitude of the human power, and the controller supplies an electric current corresponding to the human power. As a result, the power of the motor 7 increases by the amount of increase in the human power.

Incidentally, when the pedal crankshaft 2 rotates slower than the resultant power shaft 3, phenomenon that is opposite to the above occurs, and current to be supplied to the motor 7 is cut off.

As a result, with this power unit 1, when a difference in rotation phase occurs between the pedal crankshaft 2 and the resultant power shaft 3, an amount of rotation corresponding to the phase difference is transmitted to the rotation angle detecting sensor 14, an electric signal corresponding to the amount of human power is outputted from the rotation angle detecting sensor 14 so that the power of the motor 7 is controlled.

Therefore, since a great force for driving the vehicle body is not transmitted to the pair of planetary gear mechanisms 12, 13, the strength of each component of the pair of planetary gear mechanisms 12, 13 may be made lower than that in conventional arrangements. Therefore, as shown in this embodiment, the components of the pair of planetary gear mechanisms 12, 13 may be made of inexpensive, light-weight materials such as plastic materials. This makes it possible to manufacture the power unit 1 for the electric motor-operated vehicle at a lower cost, in reduced size and weight.

SECOND EMBODIMENT

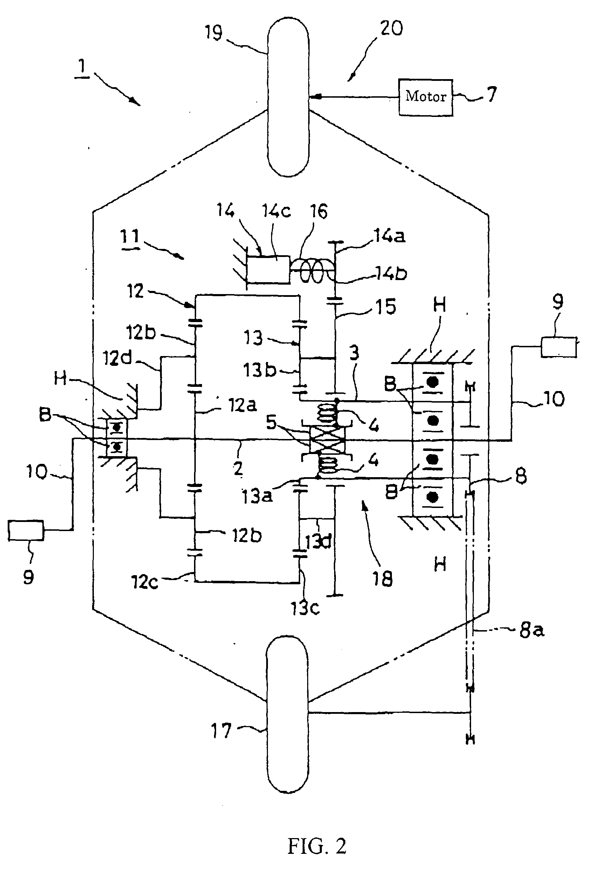

The electric motor-assisted vehicle of the invention may be constituted as shown in FIG. 2 in which the human power drive train is separate from the motor drive train.

FIG. 2 shows a constitution of an electric motor-assisted bicycle as a second embodiment of the invention. In the figure, the parts which are the same as or similar to those explained with FIG. 1 are provided with the same symbols and their detailed descriptions are omitted. In this embodiment, the invention is applied to an electric motor-assisted bicycle.

The power unit 1 for the electric motor-assisted bicycle shown in FIG. 2 is constituted with a human power rear wheel drive train 18 for transmitting the rotation of the pedal crankshaft 2 to the rear wheel 17, and a motor front wheel drive train 20 for driving the front wheel 19 with an electric motor 7.

The human power rear wheel drive train 18 has a constitution in which the motor drive train is removed from the power unit 1 of the first embodiment. That is, the resultant power shaft 3 is connected only to the pedal crankshaft 2 through the elastic members 4 and the one-way clutch 5. The resultant power shaft 3 (output member) of the human power detecting means 11 of this embodiment is provided with a sun gear 13a of the second planetary gear mechanism 13.

The motor front wheel drive train 20 is constituted with the motor 7 disposed within the hub (not shown) of the front wheel 19 to rotate the hub relative to a wheel shaft. The output of the motor 7, like the first embodiment, is controlled according to the magnitude of the pedaling power detected with the rotation angle detecting sensor 14.

The power unit 1 in which the human power rear wheel drive train 18 is separate from the motor front wheel drive train 20 has the same effects as the first embodiment.

THIRD EMBODIMENT

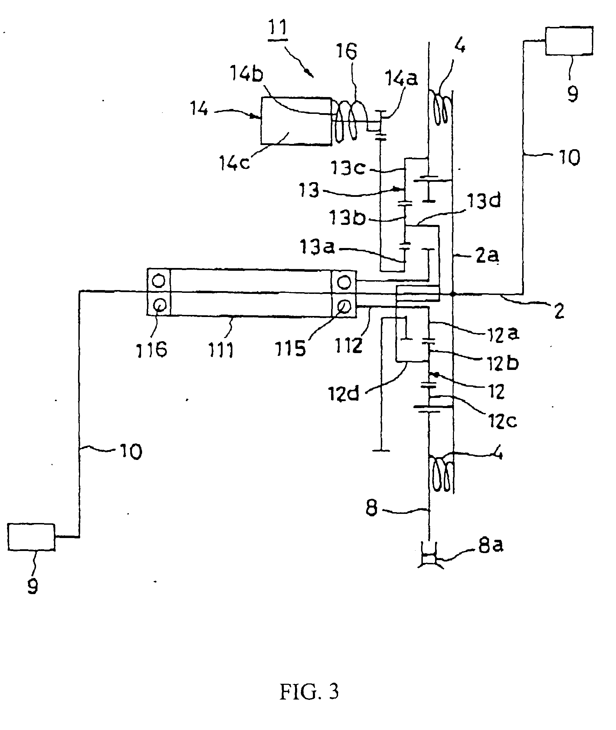

The human power detecting means to be mounted on the electric motor-assisted vehicle of the invention may be constituted as shown in FIGs. 3 to 10. The human power detecting means of this embodiment, like the second embodiment, is constituted with the human drive train separate from the motor drive train and is applied to the power unit for an electric motor-assisted bicycle.

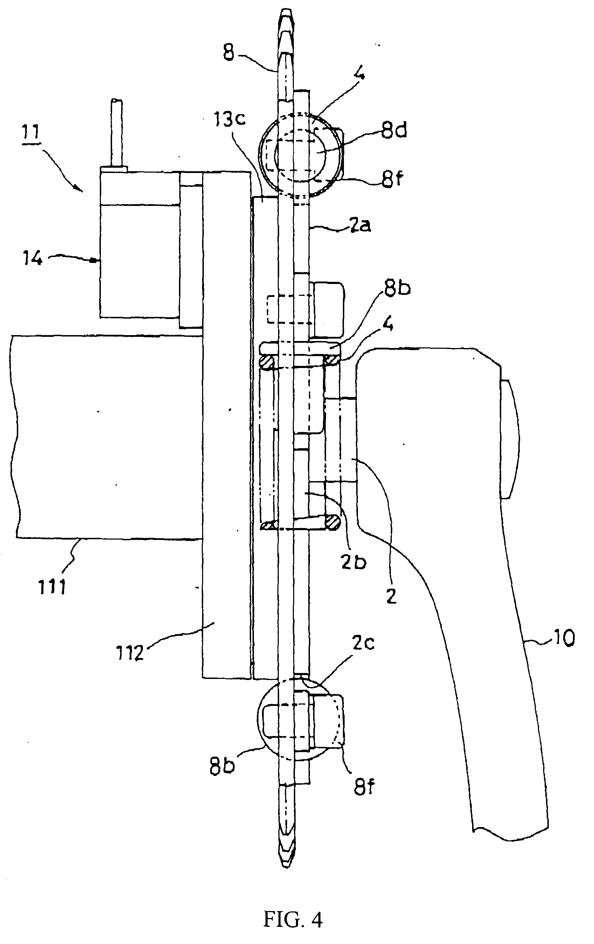

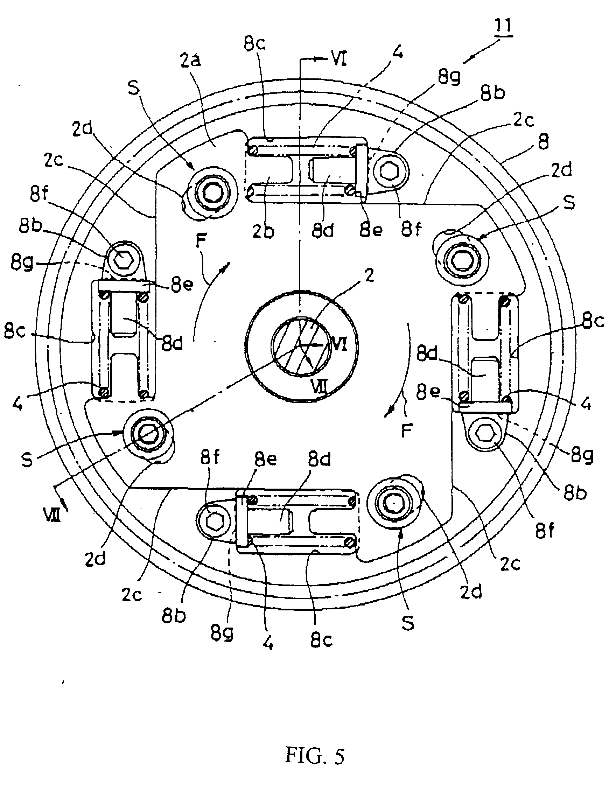

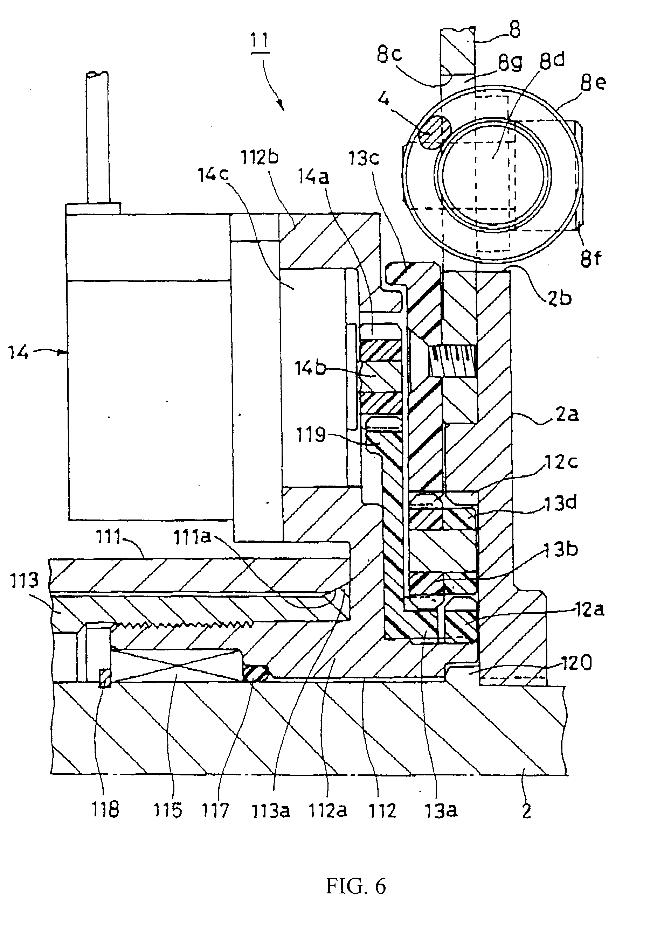

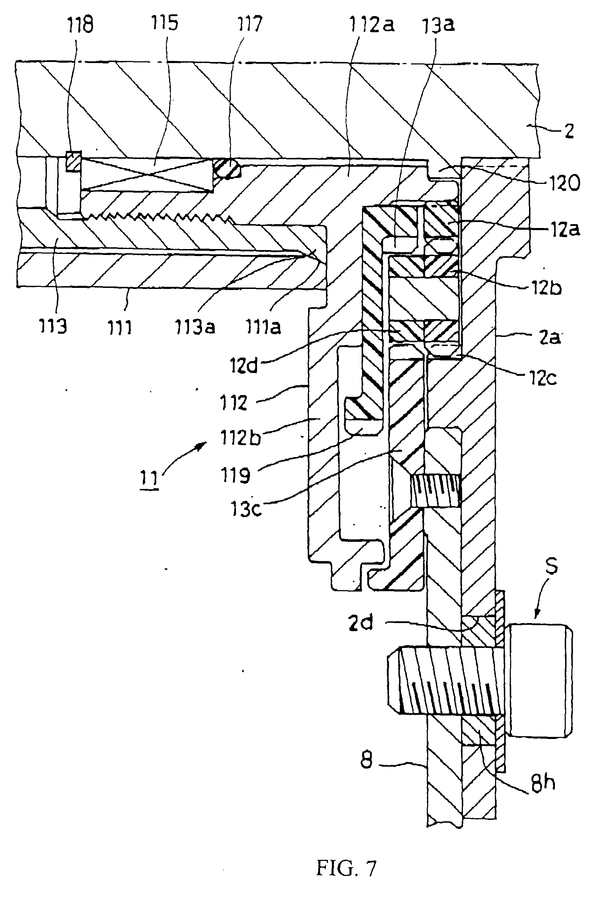

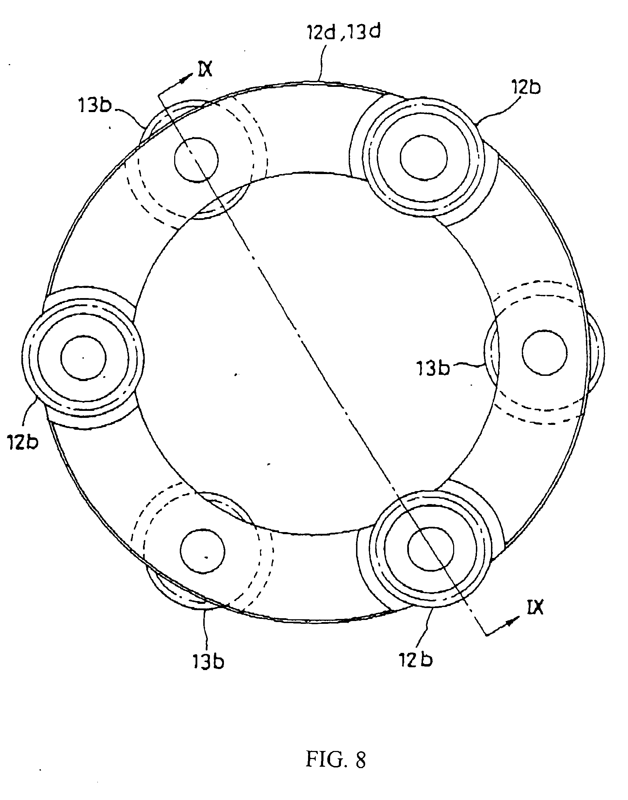

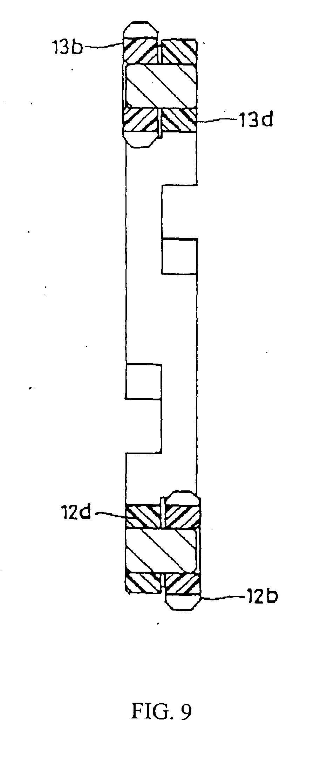

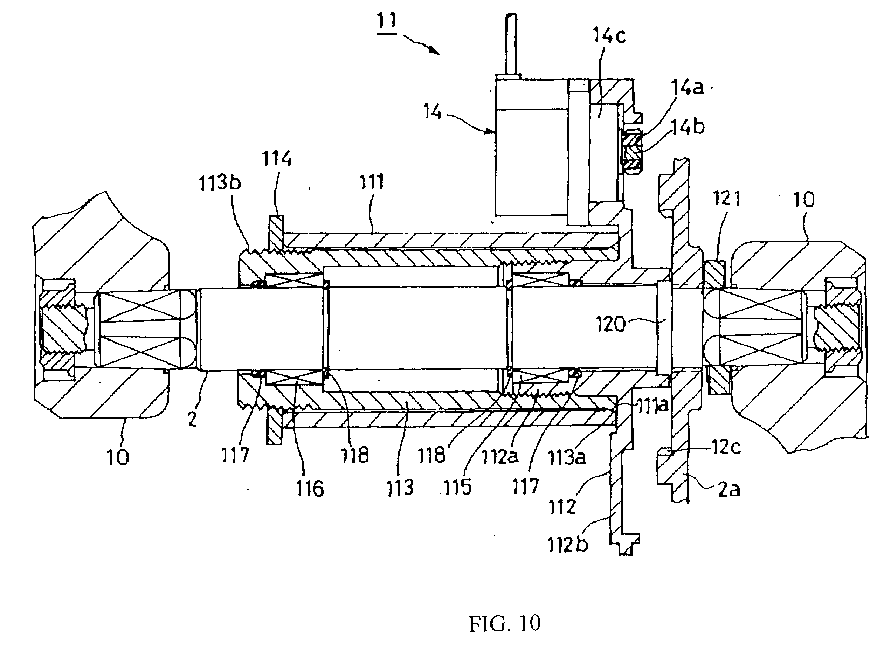

FIG. 3 shows the constitution of another embodiment of the human power detecting means. FIG. 4 is a plan view of the human power detecting means. FIG. 5 is a side view of the human power detecting means as seen from the right of the vehicle. FIG. 6 shows a cross section VI- VI in FIG. 5. FIG. 7 shows a cross section VII- VII in FIG. 5. FIG. 8 is a side view of the carrier. FIG. 9 shows a cross section IX- IX in FIG. 8. FIG. 10 shows a cross section of the human power detecting means mounted on the hanger pipe. In the figure, the parts which are the same as or similar to those explained with FIGs. 1 and 2 are provided with the same symbols and their detailed descriptions are omitted.

The human power detecting means 11 of this embodiment is constituted as shown in FIG. 3: The input member 2a is fixed to the pedal crankshaft 2. The outer circumferential gear 12c of the first planetary gear mechanism 12 is connected to the input member 2a. The chain sprocket 8 (output member) is connected to the input member 2a through four elastic members 4. The outer circumferential gear 13c of the second planetary gear mechanism 13 is connected to the chain sprocket 8. The first planetary gear mechanism 12 and the second planetary gear mechanism 13 are interconnected through the carriers 12d, 13d which support the planetary gears 12b, 13b, respectively.

The four elastic members 4 are compression coil springs disposed at four positions at approximately equal intervals on a circle of an approximately constant radius between the input member 2a and the chain sprocket 8 which is the output member of the invention. To describe it more in detail, as shown in FIGs. 5 and 6, each of the elastic members 4 is supported with its one end fitted over a projection 2b formed on the input member 2a and with its other end engaging with a support member 8b secured to the chain sprocket 8 using a screw. In this embodiment, in order to provide spaces for installing the elastic members 4, cuts 2c are formed in the peripheral areas of the input member 2a, and openings 8c are formed in the chain sprocket 8. The direction in which input member 2a and the chain sprocket 8 rotate when the vehicle runs forward is shown with arrows F in FIG. 5.

The support member 8 is integrally formed with a column 8d for receiving the elastic member 4 or the compression spring and with a round flange 8e, and is secured to the chain sprocket 8 using a securing bolt 8f, with the column 8d and flange 8e located in the opening 8c. The opening 8c is formed rectangular in side view. This embodiment is constituted that the round end surface of the round flange 8e is in contact with the wall surface 8g, of the opening 8c, located forward in the rotating direction of the chain sprocket 8 when the vehicle runs forward.

Bringing the round flange 8e into contact with the opening wall surface 8g as described above makes it possible to transmit the load, exerted with the elastic member 4 to the support member 8b, to the chain sprocket 8. That is, since the above-mentioned load is not exerted to the securing bolt 8f, the bolt 8f has only to have a minimum of rigidity that suffices to hold the support member 8 in position on the chain sprocket 8. As a result, the bolt 8f may be smaller in diameter, length, and weight in comparison with that used in a structure in which the above-mentioned load is exerted to the bolt 8f.

Bringing the round flange 8e into contact with the opening wall surface 8g as described above also makes it possible to reliably support the support member 8 although the support member 8 is secured with only the single bolt 8f to the chain sprocket because the round flange 8e serves as a stopper against rotation of the support member 8 about the bolt 8f when a load is exerted on the support member 8 from the elastic member 4 while the vehicle is running.

In this embodiment, a stopper mechanism S shown in FIGs. 5 and 7 is interposed between the input member 2a and the chain sprocket 8. The stopper mechanism S is provided to restrict the rotation range of the input member 2a which rotates in normal and reverse directions relative to the chain sprocket 8, and is constituted that a slider 8h (See FIG. 7) secured with a screw to the chain sprocket 8 fits into a guide groove 2d formed in the input member 2.

That s to say, when the vehicle is running forward, if the input member 2a rotates relative to the chain sprocket 8 as the input member 2a compresses the elastic members 4, the slider 8h moves back and forth within the guide groove 2d. When a pedaling power exceeding a value at which the output of the motor 7 reaches a maximum is applied from the input member 2a, the slider 8h comes into contact with the groove wall surface at the rear end, with respect to the rotating direction, of the guide groove 2d, and the input member 2a and the chain sprocket 8 rotate as a single body. On the other hand, when the pedal depressing power disappears, the input member 2a rotates against the resilient forces of the elastic members 4 in the opposite direction until the slider 8h comes into contact with the groove wall surface on the opposite side of the guide groove 2d.

The first planetary gear mechanism 12 of this embodiment is constituted as follows: As shown in FIG. 7, the outer circumferential gear 12c is formed integrally with the input member 2a. As shown in FIGs. 6, 7, and 10, the sun gear 12a is made unable to rotate by means of a sensor supporting bracket 112 and is fixed to a hanger pipe 111 of an electric motor-assisted bicycle. The rotation angle detecting sensor 14 is supported with sensor supporting bracket 112. Here, the structure for attaching the sensor supporting bracket 112 to the hanger pipe 111 will be described.

The hanger pipe 111 constitutes part of the vehicle body frame (not shown) of the electric motor-assisted bicycle and serves to support the pedal crankshaft 2 to be freely rotatable. A support cylinder 113 is inserted into the hanger pipe 111 from the opening on the vehicle body right side (also on the right side in FIG. 10). The support cylinder 113 has a taper portion 113a, with its diameter increasing toward the right of the vehicle body, around the circumferential portion on the vehicle body right side end, and with its vehicle body left side end formed with a thread 113b, and passes through the hanger pipe 111. The taper portion 113a is formed to fit to a taper surface 111a formed on the inside circumferential surface of the vehicle body right side end of the hanger pipe 111.

The support cylinder 113 is fixed to the hanger pipe 111, in the state of the taper portion 113a being fitted to the taper surface 111a, by screw engagement of a nut 114 with the thread 113b on the vehicle body left side. The sensor support bracket 112 is secured to the inside of the support cylinder 113.

The sensor support bracket 112 is constituted as a single member made up of two integral parts: a cylinder 112a inserted for screwing engagement with the inside cylindrical surface of the support cylinder 113 on the right side of the vehicle body, and a disk-shaped bracket main part 112b formed integrally with part of the cylinder 112a, exposed beyond the support cylinder 113, and extended radially outward. The sun gear 12a of the first planetary gear mechanism 12 is spline-fitted onto the outer circumference of the vehicle body right side of the cylinder 112a. The rotation angle detecting sensor 14 is fixed to the bracket main part 112b. Incidentally, the rotation angle detecting sensor 14 is located in a space surrounded with frame members (not shown) such as a down tube, a seat tube, and a chain stay so that it does not interfere with them. To settle the position of the rotation angle detecting sensor 14, the sensor support bracket 112 is screwed into the support cylinder 113, and the support cylinder 113 is rotated relative to the hanger pipe 111.

The vehicle body right side part of the pedal crankshaft 2 is rotatably supported with a first bearing 115 fitted to the fore-end inside of the cylinder 112a. The vehicle body left side part of the pedal crankshaft 2 is rotatably supported with a second bearing 116 fitted to the inside cylindrical surface, on the vehicle body left side, of the support cylinder 113. O-rings 117 are provided on the pedal crankshaft 2 on the vehicle body outer sides than the bearings 115 and 116. Snap rings 118 for securing the bearings are provided on the pedal crankshaft 2 on the vehicle body inner sides than the bearings 115 and 116.

As shown in FIGs. 8 and 9, the carrier 12d for supporting the planetary gears 12b of the first planetary gear mechanism 12 and the carrier 13d for supporting the planetary gears 13b of the second planetary gear mechanism 13 are formed as an integral, annular member. The planetary gears 12b and 13b, three for each, are arranged at equal intervals in the circumferential direction of the carriers 12d and 13d. The carrier 12d accommodates the planetary gears 12b in recesses opening on the vehicle body right side, while the carrier 13d accommodates the planetary gears 13b in recesses opening on the vehicle body left side.

In this way, employing the structure in which the planetary gears 12b and 13b are disposed at different positions in the circumferential direction, on both sides in the axial direction, makes it possible to reduce the length in the axial direction of the carriers 12d and 13d, although respectively plural number of the planetary gears 12b and 13b are disposed at different positions in the circumferential direction, on both sides in the axial direction.

The second planetary gear mechanism 13 is constituted as shown in FIG. 6. The outer circumferential gear 13c is fixed to the chain sprocket 8. The sun gear 13a is supported for free rotation on the cylinder 112a of the sensor support bracket 12. The input gear 14a of the rotation detecting sensor 14 meshes with the sensor gear 119 formed integrally with the sun gear 13a.

Also when this form of embodying the invention is employed, the numbers of teeth are made the same between sun gears 12a and 13a, between the planetary gears 12b and 13b, and between the outer circumferential gears 12c and 13c of the planetary gear mechanisms 12 and 13. The numbers of the planetary gears 12b and 13b are also made the same.

Next, the steps in mounting the human power detecting means 11 of this embodiment on the vehicle body frame of the electric motor-assisted bicycle are described.

The first and second planetary gear mechanisms 12 and 13 are installed on the pedal crankshaft 2 in advance and mounted together with the pedal crankshaft 2 on the vehicle body. That is, first, the pedal crankshaft 2 is inserted into the cylinder 112a of the sensor support bracket 112 from the vehicle body right side. The O-ring 17 and the first bearing 115 on the vehicle body right side are installed with the raised strip 120 of the pedal crankshaft 2 in contact with the vehicle body right side end of the sensor support bracket 112 (See FIGs. 6, 7, and 10). Incidentally, the O-ring 17 and the first bearing 115 may be installed in the cylinder 112a before inserting the pedal crankshaft 2 into the cylinder 112a.

The, the two snap rings 18 are fitted to the pedal crankshaft 2, and the second bearing 116 and the O-ring 117 on the vehicle body left side are installed. After that, the pedal crankshaft 2 and the cylinder 112a are inserted in to the support cylinder 113 from the vehicle body right side, and the support cylinder 113 is screwed into and secured to the cylinder 112a. Incidentally, the O-ring 17 and the second bearing 116 may be installed in the support cylinder 113 before inserting the pedal crankshaft 2.

After attaching the sensor support bracket 112 and the support cylinder 113 on the pedal crankshaft 2, the sun gears 12a and 13a of the first and second planetary gear mechanisms 12 and 13 are attached to the cylinder 112a of the sensor support bracket 112. The planetary gears 12b and 13b supported with the carriers 12d and 13d are made to mesh with the sun gears 12a and 13a from the vehicle body right side.

Separately from the above-described assembly steps on the pedal crankshaft 2 side, the input member 2a and the chain sprocket 8 are interconnected through the elastic members 4, the support member 8b, and the stopper S. In the middle of the step of connecting the input member 2a, or after finishing the connection, the outer circumferential gear 13c of the second planetary gear mechanism 13 is secured to the chain sprocket 8.

The assembled set of the input member 2a, the chain sprocket 8, and the outer circumferential gear 13c is spline-fitted to the vehicle body right side end portion of the pedal crankshaft 2 to which the gears are already attached as described above. At this time, the input member 2a is made to contact the raised strip 120 of the pedal crankshaft 2. This contact causes the outer circumferential gear 12c located on the input member 2a side to mesh with the planetary gears 12b, and causes the outer circumferential gear 13c located on the chain sprocket 8 side to mesh with the planetary gears 13b.

Next, as shown in FIG. 10, a spring washer 121 and a crank 10 are attached in that order to the vehicle body right side end portion of the pedal crankshaft 2, and the input member 2 is fixed in the state of contacting the raised strip 120.

After attaching the input member 2a, the chain sprocket 8, and the planetary gears 12, 13 of the first and second planetary gear mechanisms 12, 13 to the pedal crankshaft 2 as described above, the rotation detecting sensor 14 is attached to the support bracket 112. The assembled set of the pedal crankshaft 2 and others is inserted into the hanger pipe 111 from the vehicle body right side. The taper portion 113a of the vehicle body right side end of the support cylinder 113 is fitted to the taper surface 111a of the hanger pipe 111, and a nut 114 is screwed onto the thread 113b on the vehicle body left side. When fitting the nut 114, the sensor support bracket 112 is rotated by hand together with the support cylinder 113 to set the rotation detecting sensor 14 in position.

After setting the rotation detecting sensor 14 in position, the nut 114 is tightened. As a result of this tightening, the support cylinder 113 is fixed to the hanger pipe 111 in the state of the hanger pipe 111 being squeezed from both sides with the taper portion 113a of the support cylinder 113 and the nut 114. In this way, the human power detecting means 11 of this embodiment is mounted on the vehicle body.

As described above, also with the constitution shown in this embodiment, since a great power for driving the vehicle body is not transmitted to the pair of planetary gear mechanisms 12, 13 for detecting the human power, the strength of each component of the planetary gear mechanisms 12, 13 may be reduced in comparison with that of conventional counterparts. In this embodiment, the following components are made of plastic materials to reduce the size, weight, and cost of the human power detecting means 11; the sun gears 12a, 13a of the first and second planetary gear mechanisms 12, 13; the planetary gears 12b, 13b; the outer circumferential gear 13c of the second planetary gear mechanism 13; the annular portions of the carriers 12d, 13d; and the input gear 14a of the rotation detecting means 14.

The electric motor-assisted bicycle of this embodiment makes it possible to dispose the chain type transmitting means of the human power rear wheel drive train (the chain sprocket 8 and the chain 8a) and the human power detecting means 11 on the same one side in the vehicle width direction, namely on the vehicle body right side. Therefore, it is possible to mount the components of the human power rear wheel drive train and the human power detecting mechanism on the vehicle body in a compact arrangement.

Furthermore, since the input member 2a, chain sprocket 8 (output member), and the first and second planetary gear mechanisms 12, 13 are disposed collectively on one side of the vehicle body, work of mounting those components on the vehicle body is simple. In particular, since it is possible to mount the human power detecting means 11 of this embodiment on the vehicle body, in the state of the input member 2a, chain sprocket 8, the first and second planetary gear mechanisms 12, 13, and the rotation detecting sensor 14 being assembled together, the work of mounting oh the vehicle body is all the more simple.

Furthermore, since the first and second planetary gear mechanisms 12, 13 are disposed radially more inward than the elastic members 4 as seen in the axial direction of the input member 2a, the size of the arrangement can be made small size by eliminating ineffective spaces.

FOURTH EMBODIMENT

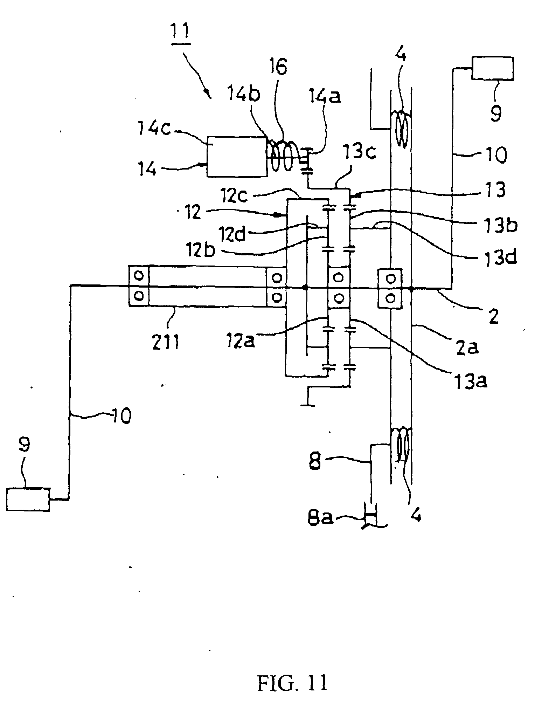

The human power detecting means of the electric motor-assisted bicycle may be constituted as shown in FIGs. 11 to 15.

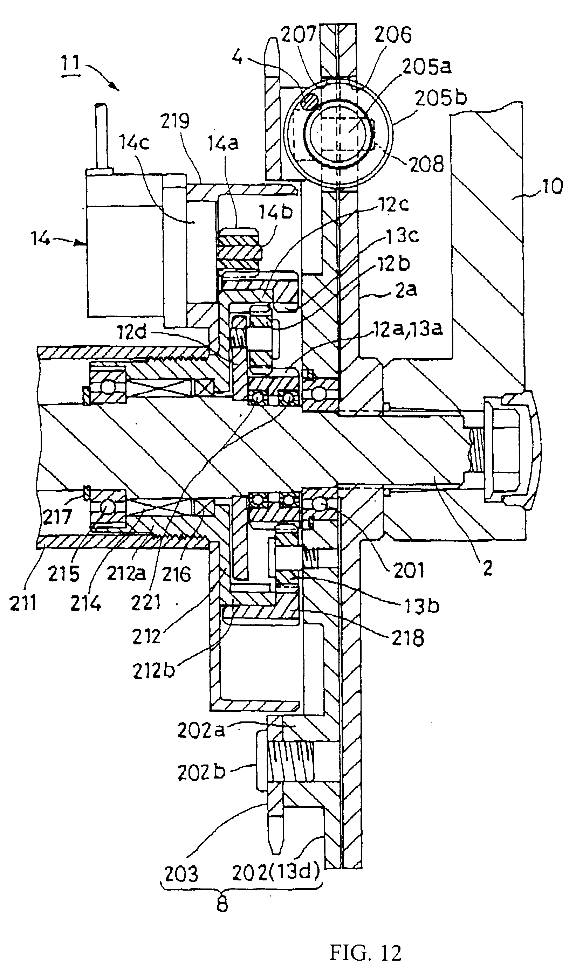

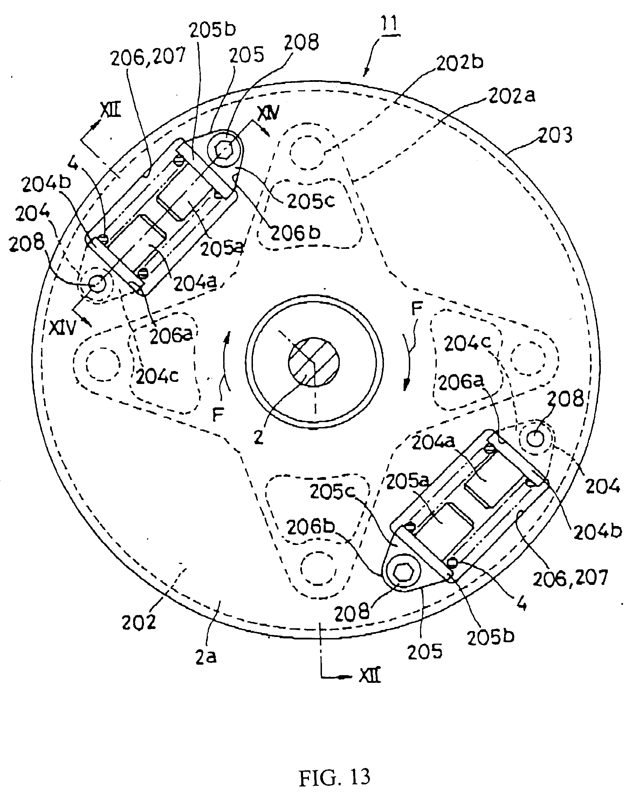

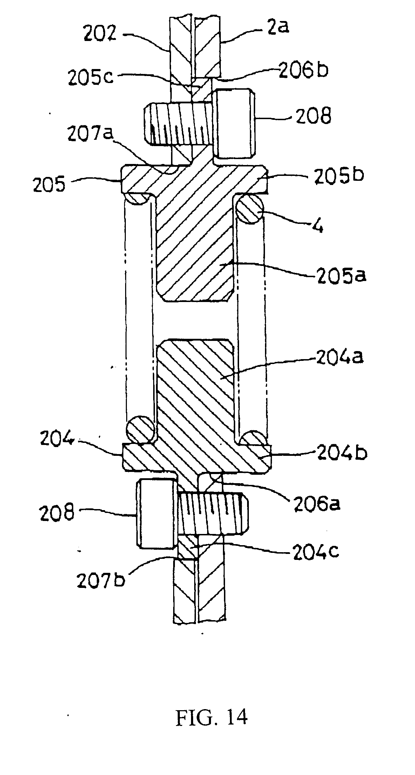

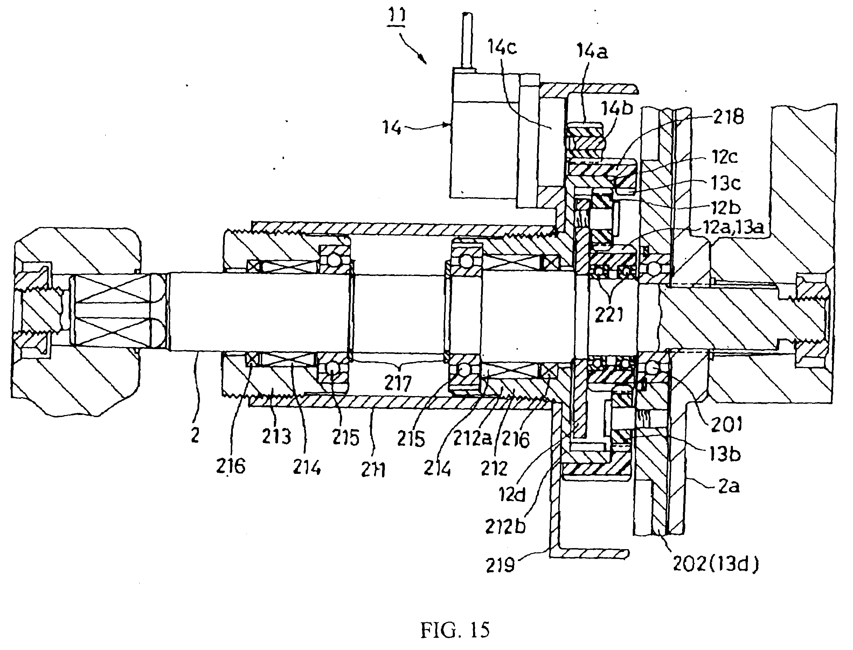

FIG. 11 shows the constitution of another embodiment of the human power detecting means. FIG. 12 shows a cross section of the human power detecting means as seen along the line XII-XII in FIG. 13. FIG. 13 is a side view from the right side of the vehicle body. FIG. 14 shows a cross section of the support structure of the elastic member as seen along the line XIV-XIV in FIG. 13. FIG. 15 shows a cross section of the embodiment as attached to the hanger pipe. In those figures, the parts which are the same as or similar to those explained with FIGs. 1 to 10 are provided with the same symbols and their detailed descriptions are omitted.

As shown in FIG. 11, in the human power detecting means 11 of this embodiment, the carrier 12d of the first planetary gear mechanism 12 is attached to the pedal crankshaft 2 while the carrier 13d of the second planetary gear mechanism 13 is attached to the chain sprocket 8 (output member) connected to the input member 2a through two elastic members 4. The first planetary gear mechanism 12 and the second planetary gear mechanism 13 are interconnected through the sun gears 12a and 13a.

The chain sprocket 8 (output member) in this embodiment as shown in FIG. 12 is constituted with a disk 202 supported for free rotation with a bearing 201 on the pedal crankshaft 2, and a chain ring 203 secured to the periphery of the disk 202. The disk 202 constitutes the planetary gear supporting carrier 13d of the second planetary gear mechanism 13. The chain ring 203 is removably attached to an attachment boss 202a formed to project from the disk 202 on the opposite side of the input member 2a by means of securing bolts 202b.

Since the elastic members 4 and the chain ring 203 are arranged in the axial direction of the input member 2a and the disk 202 when the chain ring 203 is attached to the disk 202, setting the diameter and axial positioning of the chain ring 203 is not restricted by the radial positioning of the elastic members 4 relative to the input member 2a and the disk 202.

Therefore, the freedom in designing the diameter and positioning in axial direction of the chain ring 203 is high.

Also, since the first and second planetary gear mechanisms 12, 13 may be disposed radially more inner side than the elastic members 4 as seen in the axial direction of the input member 2a, the arrangement may be small-sized by eliminating unused spaces. Furthermore, since the chain ring 203 only can be replaced without removing the disk 202, the maintenance work is simple.

The two elastic members 4 are two compression coil springs disposed at two positions at approximately equal intervals on a circle of an approximately constant radius between the input member 2a and the disk 202. To describe it more in detail, as shown in FIGs. 12 to 14, each of the compression coil springs 4 is supported with its one end fitted over a support member 204 secured to the input member 2a and with its other end fitted over a support member 205 secured to the disk 202.

In this embodiment, in order to provide spaces for installing the elastic members 4, openings 206 are formed in the peripheral areas of the input member 2a and openings 207 are formed in the disk 202 of the chain sprocket 8. The direction in which input member 2a and the chain sprocket 8 rotate when the vehicle runs forward is shown with arrows F in FIG. 13.

The support member 204 is integrally formed with; a column 204a for receiving the elastic member (compression coil spring) 4, a round flange 204b, and a generally triangular securing lug 204c for a securing bolt 8 to pass through. The support member 205 is integrally formed with; a column 205a for receiving the elastic member (compression coil spring) 4, a round flange 205b, and a generally triangular securing lug 205c for the securing bolt 8 to pass through. The support member 204 is positioned and secured in the openings 206 of the input member 2a. The support member 205 is positioned and secured in the openings 207 of the disk 202.

As shown in FIG. 14, the support member 204 is secured to the input member 2a with the securing lug 204c in surface contact with the surface on the vehicle body left side (disk 202 side) of the input member 2a and with the round flange 204b in surface contact with the wall surface 206a of the opening 206 in the input member 2a. The securing lug 204c is displaced toward the disk 202 so that the axis of the column 204a lies in the center between the input member 2a and the disk 202 when the support member 204 is secured to the input member 2a.

As shown in FIG. 13, the wall surface 206a of the opening 206 is formed flat so that its entire area comes into surface contact with the round flange 204b. The opening wall surface 206b opposite the wall surface 206a of the opening 206 is in surface contact with the securing lug 205c of the other support member 205. That is, the opening wall surface 206b is formed to be fitted with the two sides excluding the base of the securing lug 205c of triangular shape in side view.

As shown in FIG. 14, the support member 205 is positioned with the securing lug 205c in surface contact with the surface on the vehicle body right side (input member 2a side) of the disk 202 and with the round flange 205b in surface contact with the wall surface 207a of the opening 207 in the disk 202. The securing lug 205c is displaced toward the input member 2a so that the axis of the column 205a lies in the center between the input member 2a and the disk 202 when the support member 205 is secured to the disk 202.

The opening 207 in the disk 202 is formed symmetrically relative to the opening 206 in the input member 2a, with both openings directed in opposite circumferential directions. That is, the opening 207 has the opening wall surface 207a to be surface-contacted with the round flange 205b of the support member 205 on the disk 202 side (See FIG. 14), and the opening wall surface 207b into which the securing lug 204c of the support member 204 on the input member 2a side fits (See FIG. 14).

As described above, if the round flanges 204a, 205a of the support members 204, 205 are in contact with the opening wall surfaces 206a, 207a when the vehicle is driven by human power, a load is transmitted from the input member 2a through the round flange 204a to the elastic member 4 and from the elastic member 4 through the round flange 205a to the disk 202. That is to say, since the load is not exerted to the securing bolts 208, the bolts 208 have only to have a minimum of rigidity that suffices to hold the support members 204, 205 in position on the input member 2a and the disk 202. As a result, the bolt 208 may be smaller in diameter, length, and weight in comparison with that used in a structure in which the above-mentioned load is exerted on the bolt 208.

Bringing the round flanges 204a, 205a into contact with the opening wall surfaces 206a, 207a as described above also makes it possible to reliably support the support members 204, 205 although each of the support members 204, 205 is secured with only the single bolt 208 to the input member 2a and the disk 202 because the round flanges 204a, 205a serve as stoppers against the rotation of the support members 204, 205 about the bolts 208 when the load is transmitted from input member 2a through the support members 204, 205 and the elastic members 4 to the disk 202 while the vehicle is running.

Furthermore in this embodiment, since the securing lug 204c of the support member 204 is fitted to the disk 202 while the securing lug 205c of the support member 205 is fitted to the input member 2a, the range of rotation of the input member 2a and the disk 202 caused by the elastic members 4 in opposite directions each other is restricted.

Furthermore, the rotation range of the input member 2a relative to the disk 202 during the forward running of the vehicle is restricted by the use of both of the column 204a of the support member 204 on the input member 2a side and the column 205a of the support member 205 on the disk 202 side. That is, it is constituted that the fore-end surfaces of the columns 204a, 205a are disposed to face each other with an intervening distance corresponding to the rotation range so that the input member 2a and the disk 202 rotate together after the fore-end surface of the column 204a comes into contact with that of the column 205a.

In this way, employing the structure in which the rotation range of the input member 2a is restricted with the members supporting the elastic members 4 makes it possible to eliminate the need for using components specifically for restricting the rotation range and to reduce the number of components.

As shown in FIGs. 12 and 15, the first planetary gear mechanism 12 of this embodiment is constituted as follows: The carrier 12d for supporting the planetary gears is fixed to the pedal crankshaft 2 so that they rotate together. The carrier 12d carries the planetary gear 12b with which the outer circumferential gear 12c engages. The outer circumferential gear 12c is secured, not to be rotatable, to a hanger pipe 211 of the electric motor-assisted bicycle.

Here, in reference to FIG. 15, a detailed description is made on the structure for mounting the pedal crankshaft 2 and the first and second planetary gear mechanisms 12, 13 onto the hanger pipe 211.

The hanger pipe 211 constitutes part of the vehicle body frame (not shown) of the electric motor-assisted bicycle. A first support cylinder 212 is screwed into the vehicle body right side opening of the hanger pipe 211. A second support cylinder 213 is screwed into the vehicle body left side opening of the hanger pipe 211. Roller bearings 14 and ball bearings 15 are fitted to the inside circumferences of the support cylinders 212, 213 so that the pedal crankshaft 2 is supported for free rotation. Seal members 216 are inserted at positions more outward than the roller bearings 214. Snap rings 217 are located near the vehicle body inner sides of the ball bearings 215.

The first support cylinder 212 is made up of a small diameter cylinder 212a located inside the hanger pipe 211 and a great diameter cylinder 212b formed integrally with the vehicle body right side end of the cylinder 212a. The inside circumferential portion of the great diameter cylinder 212 is formed with the outer circumferential gear 12c of the first planetary gear mechanism 12. The outside circumferential portion of the great diameter cylinder 212 supports a sensor gear 218 of cylindrical shape for free rotation. The sensor gear 218 has teeth formed on its outer circumferential portion, with the teeth engaging with the input gear 14a of the rotation detecting sensor 14. Part of the inner circumferential portion of the sensor gear 218 projecting toward the vehicle body right side beyond the great diameter cylinder 212b is formed with the outer circumferential gear 13c of the second planetary gear mechanism 13. The rotation detecting sensor 14 is supported with a sensor bracket 219 held between the hanger pipe 211 and the great diameter cylinder 212b.

The sun gear 12a of the first planetary gear mechanism 12 and the sun gear 13a of the second planetary gear mechanism 13 are formed as a single body and supported for free rotation through two bearings 221 on the pedal crankshaft 2.

In the second planetary gear mechanism 13, the planetary gears 13b are supported for free rotation on the disk 202 of the chain sprocket 8. The outer circumferential gear 13c, as described above, meshes with the input gear 14a of the rotation detecting sensor 14 through the sensor gear 218.

Also in this form of embodiment, the numbers of teeth are made the same between sun gears 12a and 13a, between the planetary gears 12b and 13b, and between the outer circumferential gears 12c and 13c of the planetary gear mechanisms 12 and 13. Also, the number of the planetary gears 12b is made the same as the number of the planetary gears 13.

Next, the steps of mounting the human power detecting means 11 of this embodiment constituted as described above on the vehicle body frame of the electric motor-assisted bicycle are described.

First, the carrier 12d is press-fitted from the vehicle body right side over the pedal crankshaft 2 and fixed. The seal member 216, the roller bearing 214, and the ball bearing 215 for the vehicle body right side are installed in the first support cylinder 212. The pedal crankshaft 2 is inserted into the first support cylinder 212 from the vehicle body right side. The snap ring 217 on the vehicle body right side is attached to the pedal crankshaft 2 to set the bearings, etc. in position.

After attaching the first support cylinder 212 to the pedal crankshaft 2 as described above, the sensor bracket 219 is fitted to the first support cylinder 212 from the vehicle body left side. The snap ring 217 for the vehicle body left side is attached to the pedal crankshaft 2. The work of attaching the snap ring 217 on the left side may be done at the time of attaching the snap ring 217 on the right side.

Next, the pedal crankshaft 2 is inserted into the hanger pipe 211 from the vehicle body right side, and the cylinder 212a of the first support cylinder 212 is made to thread-engage with the hanger pipe 211 in the state of the sensor support bracket 219 being squeezed between the hanger pipe 211 and the vehicle body left side end surface of the great diameter cylinder 212b.

The sensor support bracket 219 is rotated by hand when the first support cylinder 212 is made to thread-engage with the hanger pipe 211 so that the position where the rotation detecting sensor 14 is to be attached is set as intended.

After attaching the pedal crankshaft 2 to the hanger pipe 211 as described above, the second support cylinder 213, to which the ball bearing 215, the roller bearing 214, and the seal member 216 are already fitted, is attached to the vehicle body left side end portion of the pedal crankshaft 2, and attached by thread engagement to the hanger pipe 211 from the vehicle body left side.

After that, sun gears 12a, 13a, and the bearings 221 are fitted on the pedal crankshaft 2, and the planetary gears 12b of the first planetary gear mechanisms 12 are attached to the carrier 12d. The sensor gear 218 is fitted on the outer circumferential side of the great diameter gear 212b of the first support cylinder 212 from the vehicle body right side.

After installing the first planetary gear mechanism 12 as described above, the bearing 201 is attached on the vehicle body right side of the sun gears 12a, 13a. Then, the disk 202 is attached to the bearing 201. Incidentally, the chain ring 203 and the planetary gears 13b of the second planetary gear mechanism 13 are attached in advance to the disk 202. Also, the input member 2a is attached in advance through the elastic members 4 to the disk 202.

That is to say, the disk 202 and the input member 2a are put together and fitted onto the pedal crankshaft 2.

After installing the input member 2a as described above, the crank 10 is attached to the pedal crankshaft 2, and the rotation detecting sensor 14 is attached to the sensor support bracket 219. Thus, all the assembly work is over.

As described above, also with the constitution shown in this embodiment, since no great power is transmitted to the pair of planetary gear mechanisms 12, 13 for detecting the human power, the strengths of components in the planetary gear mechanisms 12, 13 may be lower than in the conventional arrangements. In this embodiment, the following components are made of plastic materials to reduce the size, weight, and cost of the human power detecting means 11: the sun gears 12a, 13a of the first and second planetary gear mechanisms 12, 13; the planetary gears 12b, 13b; the outer circumferential gear 13c of the second planetary gear mechanism 13; and the input gear 14a of the rotation detecting sensor 14.

The electric motor-assisted bicycle of this embodiment makes it possible to dispose the chain type transmitting means of the human power rear wheel drive train (the chain sprocket 8 and the chain 8a) and the human power detecting means 11 on one same side in the vehicle width direction, namely on the vehicle body right side. Therefore, it is possible to mount the components of the human power rear wheel drive train and the human power detecting mechanism within a small space on the vehicle body.

Furthermore, since the input member 2a, chain sprocket 8 (output member), and the first and second planetary gear mechanisms 12, 13 are disposed collectively on one side of the vehicle body, work of mounting those components on the vehicle body is simple. Since the human power detecting means 11 of this embodiment can be assembled by successively attaching the components of the first and second planetary gear mechanisms 12, 13 in the axial direction, the assembly work is simple.

Incidentally, when a constitution is employed in which the input member 2a and the output member are arranged side by side on one side of the vehicle body as in the third and fourth embodiments, the structure for interposing the elastic members 4 between the two members may be changed. That is, for example, the crank 10 attached to the pedal crankshaft 2 is assumed to be the input member, and the elastic members 4 may be interposed between the crank 10 and the chain sprocket 8 disposed adjacent to the crank 10. The elastic members 4 may be located on the forward side of the rotating direction of the crank 10, or on the vehicle body inner side with respect to the axial direction.

FIFTH EMBODIMENT

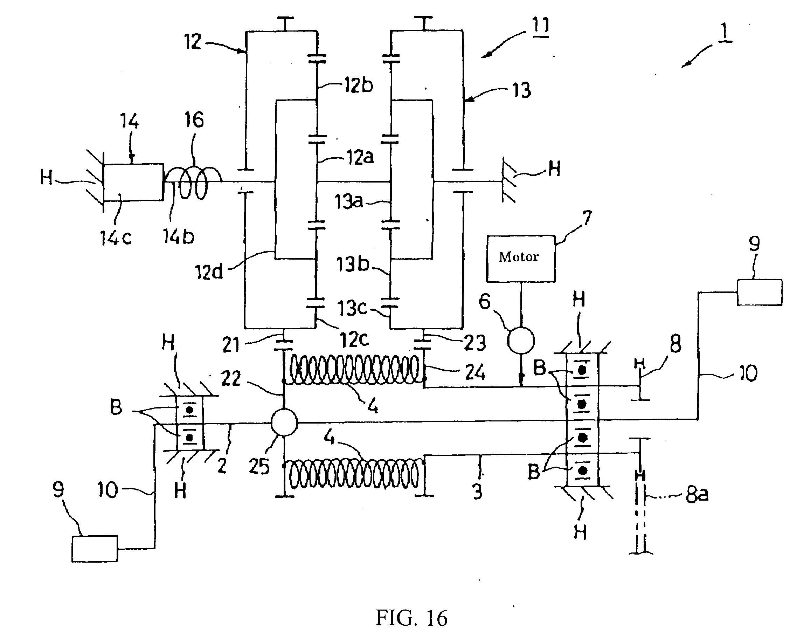

A further human power detecting means for the electric motor-assisted vehicle of the invention will be described in detail in reference to FIG. 16.

FIG. 16 shows the constitution of a human power detecting means installed in a power unit for an electric motor-assisted bicycle. In the figure, the same components or counterparts of those explained in reference to FIGs. 1 to 15 are provided with the same symbols and their detailed descriptions are omitted.

The first and second planetary gear mechanisms 12, 13 in the human power detecting means 11 shown in FIG. 16 are disposed with their axes parallel to the axes of the input member, namely the pedal crankshaft 2 and the output member, namely the resultant power shaft 3, and apart from the pedal crankshaft 2 and the resultant power shaft 3 in the direction at right angles to the axial direction. The outer circumferential gears 12c, 13c are made to mesh with the pedal crankshaft 2 and the resultant power shaft 3.

In this embodiment, the outer circumferential gear 12c of the first planetary gear mechanism 12 is formed separately from the outer circumferential gear 13c of the second planetary gear mechanism 13. The rotation detecting sensor 14 is connected to the rotary shaft of the carrier 12d for supporting the planetary gears of the first planetary gear mechanism 12, and the carrier 13d for supporting the planetary gears of the second planetary gear mechanism 13 is fixed, to be unable to rotate, to the power unit housing. The sun gears 12a and 13a are interconnected, to rotate together, through a connecting shaft.

Also in this form of embodiment, the numbers of teeth are made the same between sun gears 12a and 13a, between the planetary gears 12b and 13b, and between the outer circumferential gears 12c and 13c of the planetary gear mechanisms 12 and 13. The number of the planetary gears 12b is made the same as the number of the planetary gears 13b.

The gears 21, 22 connecting the outer circumferential gear 12c of the first planetary gear mechanism 12 to the pedal crankshaft 2, and the gears 23, 24 connecting the outer circumferential gear 13c of the second planetary gear mechanism 13 to the resultant power shaft 3 are made respectively with the same diameter so that the numbers of revolution of the outer circumferential gears 12c and 13c of the first and second planetary gear mechanisms 12, 13 agree with each other when the pedal crankshaft 2 and the resultant power shaft 3 rotate in the same phase. That is, the gear 21 and the gear 23 have the same diameter, and the gear 22 and the gear 24 have also the same diameter. Furthermore, a one-way clutch 25 is interposed between the pedal crankshaft 2 and the gear 22 to transmit the rotation of the pedal crankshaft 2 to the outer circumferential gear 12c side only.

With the power unit 1 for the electric motor-assisted bicycle constituted as described above, since the numbers of revolution of the outer circumferential gears 12c and 13c agree with each other when the pedal crankshaft 2 rotates in phase with the resultant power shaft 3, the carrier 12d of the first planetary gear mechanism 12 is in the state of halt, and no rotation is detected with the rotation angle detecting sensor 14. In that case, no electric current is supplied to the motor 7.

When the pedal crankshaft 2 rotates out of phase with the resultant power shaft 3, the equilibrium state occurring when the two planetary gear mechanisms 12, 13 rotate disappears, the phase of the outer circumferential gear 12c of the first planetary gear mechanism 12 advances ahead of the other outer circumferential gear 13c. Accordingly, the planetary gear 12b rotates about its own axis and also rotates slightly about the axis of the planetary gear mechanism, and the carrier 12d rotates. The rotation of the carrier 12d is detected with the rotation angle detecting sensor 14 and the controller supplies an electric current commensurate with the magnitude of the human power. As a result, power of the motor 7 is increased by the amount of increase in the human power.

Therefore, also with the constitution in which the pair of first and second planetary gear mechanisms 12, 13 are disposed by the side of the pedal crankshaft 2 and the resultant power shaft 3, the same effect is provided as that with the first embodiment.

Also, disposing the pair of first and second planetary gear mechanisms 12, 13 by the side of the pedal crankshaft 2 and the resultant power shaft 3 enables to reduce the diameters of the planetary gear mechanisms 12, 13 in comparison with the constitution in which the pedal crankshaft 2 and the resultant power shaft 3 are disposed in the axial center of the planetary gear mechanisms 12, 13.

Also with the constitution in which the pair of first and second planetary gear mechanisms 12, 13 are disposed by the side of the pedal crankshaft 2, the constitution shown in FIG. 2 can be employed, namely the constitution in which the drive train is divided into the human power rear wheel drive train 18 is separate from the motor front wheel drive train 20 can be employed.

Of components in three sets of the pair of planetary gear mechanisms 12, 13, namely two sun gears 12a, 13a, two carriers 12d, 13d for supporting sun gears, and two outer circumferential gears 12c, 13c, components on the input side connected to the pedal crankshaft 2 (input member) and the resultant power shaft (output member) and components on the output side connected to the rotation angle detecting sensor 14 may be appropriately changed. Layout examples of the three sets of components are shown in the Table 1 below.

[0123]

Table 1

※

In the table, the symbol ST stands for the numbers of teeth of the sun gears 12a and 13a, and RT stands for the numbers of teeth of the outer circumferential gears 12c and 13c. The values of the increase ratio in the table are based on the assumption that the number ST of teeth of the sun gears 12a and 13a is 20, the number RT of teeth of the outer circumferential gears 12c and 13c is 60, and the number of the planetary gears 12b and 13b is 20. The increase ratio is the ratio of the rotation angle of the output side component relative to the phase difference between the pedal crankshaft 2 and the resultant power shaft 3.

In the case the sun gears 12a and 13a are respectively connected to the pedal crankshaft 2 of the human power drive train and the resultant power shaft 3, the constitutions shown in Ex. 1 and Ex. 2 in the table 1 may be employed.

## Table 1

| Input | | Layout | Output | Increase ratio (Output/Phase difference) |
|---|---|---|---|---|
| Sun gear | Ex. 1 | | Outer circumferential gear | $\dfrac{1}{\dfrac{RT}{ST}+1} \times \left(1+\dfrac{ST}{RT}\right) = \dfrac{1}{3}$ (Normal) |
| | Ex. 2 | | Carrier | $\dfrac{ST}{RT} \times \dfrac{1}{\dfrac{ST}{RT}+1} = \dfrac{1}{4}$ (Reverse) |
| Outer circumferential gear | Ex. 3 | | Carrier | $\dfrac{RT}{ST} \times \dfrac{1}{\dfrac{RT}{ST}+1} = \dfrac{3}{4}$ (Reverse) |
| | Ex. 4 | | Sun gear | $\dfrac{1}{\dfrac{RT}{ST}+1} \times \left(\dfrac{RT}{ST}+1\right) = 3$ (Normal) |
| Carrier | Ex. 5 | | Outer circumferential gear | $\left(\dfrac{RT}{ST}+1\right) \times \dfrac{ST}{RT} = \dfrac{3}{4}$ (Reverse) |
| | Ex. 6 | | Sun gear | $\left(\dfrac{ST}{RT}+1\right) \times \dfrac{RT}{ST} = 4$ (Reverse) |

The layout example of Ex. 1 is constituted that the rotation angle sensor 14 is connected to the outer circumferential gear 12c of the first planetary gear mechanism 12, the outer circumferential gear 13c of the first planetary gear mechanism 13 is fixed so as not to rotate, and the carriers 12d and 13d are interconnected. When this constitution is employed, the increase ratio (output/phase difference) becomes 1/3, and the rotating direction of the outer circumferential gear 12c connected to the rotation angle sensor 14 is the same as the input side.

The Ex. 2 is a layout when the constitution of the first or second embodiment is employed, in which the carrier 12d of the first planetary gear mechanism 12 is secured not to rotate, the carrier 13d of the second planetary gear mechanism 13 is connected to the rotation angle detecting sensor 14, and the outer circumferential gears 12c and 13c are interconnected. When this constitution is employed, the increase ratio (output/phase difference) becomes 1/4, and the rotating direction of the outer circumferential gear 12c connected to the rotation angle sensor 14 is opposite to the rotating direction on the input side.

In the case the outer circumferential gears 12c and 13c are connected to the pedal crankshaft 2 of the human power drive train and the resultant power shaft 3, the constitution shown in Ex. 3 and Ex. 4 may be employed.

The Ex. 3 is a layout when the constitution of the fifth embodiment is employed, in which the rotation angle detecting sensor 14 is connected to the carrier 12d of the first planetary gear mechanism 12, the carrier 13d of the second planetary gear mechanism 13 is secured not to rotate, and the outer circumferential gears 12c and 13c are interconnected. When this constitution is employed, the increase ratio (output/phase difference) becomes 3/4, and the rotating direction of the outer circumferential gear 12d connected to the rotation angle sensor 14 is opposite to the rotating direction on the input side.

The Ex. 4 is a layout when the constitution of the third embodiment is employed, in which the sun ear 12a of the first planetary gear mechanism 12 is fixed not to rotate, the rotation angle detecting sensor 14 is connected to the sun gear 13a of the second planetary gear mechanism 13, and the carriers 12d and 13d are interconnected. When this constitution is employed, the increase ratio becomes 3, and the rotating direction of the outer circumferential gear 12c connected to the rotation angle sensor 14 is the same as on the input side.

In the case the carriers 12d and 13d are connected to the pedal crankshaft 2 of the human power drive train and the output member, the constitutions shown in Ex. 5 and Ex. 6 may be employed.

The Ex. 5 is a layout when the constitution of the fourth embodiment is employed, in which the outer circumferential gear 12c of the first planetary gear mechanism 12 is fixed not to rotate, the rotation angle detecting sensor 14 is connected to the outer circumferential gear 13c of the second planetary gear mechanism 13, and the sun gears 12a and 13a are interconnected. When this constitution is employed, the increase ratio becomes 3/4, and the rotating direction of the outer circumferential gear 12c connected to the rotation angle sensor 14 is opposite to the rotating direction on the input side.

In the Ex. 6, the rotation angle detecting sensor 14 is connected to the sun gear 12a of the first planetary gear mechanism 12, the sun gear 13a of the second planetary gear mechanism 13 is fixed not to rotate, and the outer circumferential gears 12c and 13c are interconnected. When this constitution is employed, the increase ratio becomes 4, and the rotating direction of the sun gear 12a connected to the rotation angle detecting sensor 14 is opposite to the rotating direction on the input side.

In the layout examples Ex. 1 to Ex. 6, the component connecting the rotation angle detecting sensor 14 and the component for prohibiting the rotation may be replaced with the first planetary gear mechanism 12 and the second planetary gear mechanism 13. For example, in the case the layout of Ex. 1 is employed, it may be constituted that the rotation angle detecting sensor 14 is connected to the outer circumferential gear 13c of the second planetary gear mechanism 13, and the outer circumferential gear 12c of the first planetary gear mechanism 12 is fixed not to rotate.

In the case the constitution of Ex. 4 or Ex. 6 is employed, since the phase difference between components on the input side is increased and transmitted to the rotation angle detecting sensor 14, even if a rotation angle detecting sensor of a lower resolution is used, detection of the same accuracy as in other layout is possible. Therefore, a rotation angle detecting sensor 14 of a lower price can be used. This can further reduce the cost of the power unit 1.

SIXTH EMBODIMENT

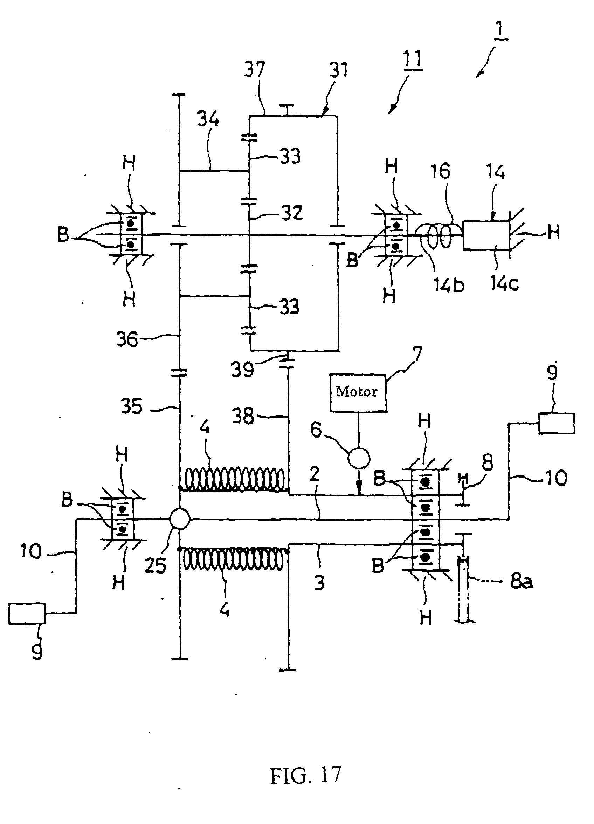

Another embodiment of a human power detecting means for the electric motor-assisted vehicle of the invention will be hereinafter described in reference to FIGs. 17 to 19.

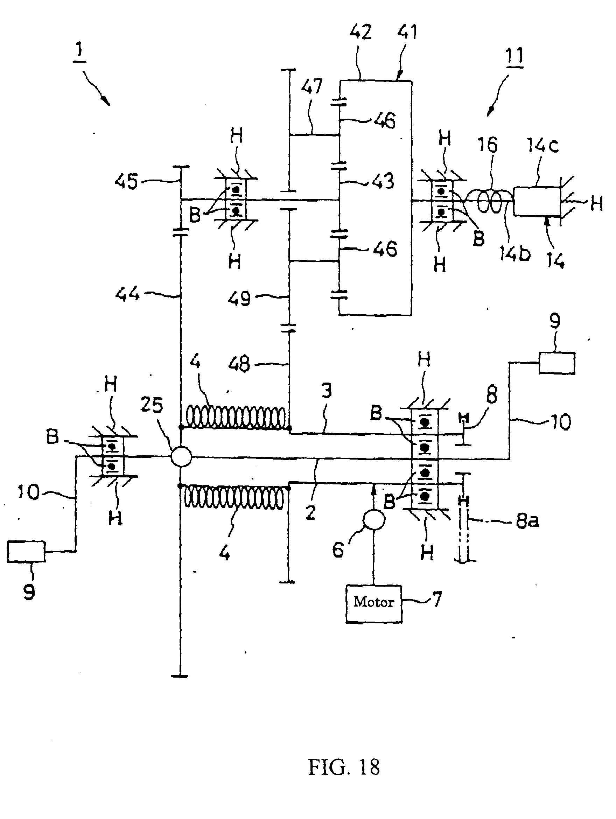

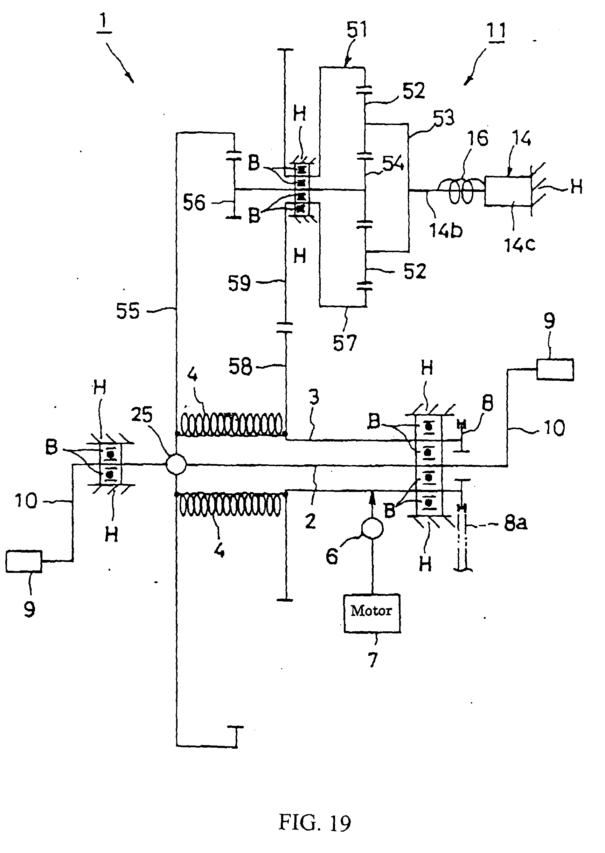

FIG. 17 shows a constitution example of connecting the rotation angle detection sensor to the sun gear. FIG. 18 shows a constitution example of connecting the rotation angle detection sensor to the outer circumferential gear. FIG. 19 shows a constitution example of connecting the rotation angle detection sensor to the carrier. In these figures, the same components or counterparts of those explained in reference to FIGs. 1 to 16 are provided with the same symbols and their detailed descriptions are omitted.

The human power detecting means 11 for the electric motor-assisted bicycle shown in FIG. 17 is constituted that a planetary gear mechanism 31 is mesh-connected to the pedal crankshaft 2 and the resultant power shaft 3, and the rotation angle detecting sensor 14 is connected to both of the shafts 2 and 3 through the planetary gear mechanism 31. The planetary gear mechanism 31 is constituted that the input shaft 14b of the rotation angle detecting sensor 14 is connected to a sun gear 32 so that they rotate together, and the pedal crankshaft 2 is connected through gears 35, 35 to a carrier 34 supporting planetary gears 33 for free rotation. The resultant power shaft 3 is connected to an outer circumferential gear 37 through gears 38 and 39.

The gears 35 and 36 interconnecting the pedal crankshaft 2 and the carrier 34 are formed with the same number of teeth (same diameter). The gears 38 and 39 interconnecting the resultant power shaft 3 and the outer circumferential gear 37 are formed with different numbers of teeth. Also, the numbers of teeth of the gears 38 and 39 are made different from the number of teeth of the gears 35 and 36.

If the numbers of teeth of the components of the planetary gear mechanism 31, and the numbers of teeth of the gears 35, 36, 38, and 39 are set so that the equation (1) below is satisfied, the input shaft 14b of the rotation angle detecting sensor 14 is stationary when no difference in phase exists between the pedal crankshaft 2 and the resultant power shaft 3, and the input shaft 14b of the rotation angle detecting sensor 14 rotates when a difference in rotation phase occurs between the pedal crankshaft 2 and the resultant power shaft 3.

In the equation (1) below, the numbers of teeth in the planetary gear mechanism 31 are represented with symbols: ST for the sun gear 32, RT for the outer circumferential gear 37, A for the gear 35, B for the gear 36, C for the gear 38, and D for the gear 39.

$$(1 + ST/RT) = (C/D)/(A/B) \qquad (1)$$

When it is assumed for example that, the number of teeth ST of the sun gear 32 is 20, the number of teeth of the planetary gears 33 is 20, and the number of teeth RT of the outer circumferential gear 37 is 60, the numbers of teeth of the above-mentioned four gears 35 (A), 36 (B), 38 (C), and 39 (D) according to the equation (1) above become as shown in the table below.

Table 2

|       | A  | B  | C  | D  |
|-------|----|----|----|----|
| Ex. 1 | 14 | 14 | 16 | 12 |
| Ex. 2 | 28 | 28 | 32 | 24 |
| Ex. 3 | 35 | 35 | 40 | 30 |

Also with the constitution of the power unit 1 shown in FIG. 17, the human power for driving the vehicle body is transmitted from the pedal crankshaft 2 to the resultant power shaft 3 through the one-way clutch 25 and the elastic members 4, and the planetary gear mechanism 31 connected to the pedal crankshaft 2 and the resultant power shaft 3 rotates as interlocked with both shafts 2 and 3.

The input shaft 14b of the rotation angle detecting sensor 14 does not rotate when the pedal crankshaft 2 rotates in phase with the resultant power shaft 3. When the pedal crankshaft 2 rotates out of phase of the resultant power shaft 3, the input shaft 14b rotates by an angle commensurate with the phase difference.

Also in this embodiment like the embodiments described so far, since great forces for driving the vehicle body are not transmitted to the planetary gear mechanism 31 for detecting the human power, the components of the planetary gear mechanism 31 may have lower strengths than in conventional arrangements. As a result, the components of the planetary gear mechanism 31 may be made of light, inexpensive materials such as plastics. This makes it possible to provide the power unit 1 at a reduced cost, and in reduced size and weight.

The human power detecting means 11 for the electric motor-assisted bicycle shown in FIG. 18 is constituted that a planetary gear mechanism 41 is mesh-connected to the pedal crankshaft 2 and the resultant power shaft 3, and the rotation angle detecting sensor 14 is connected to both of the shafts 2 and 3 through the planetary gear mechanism 41. In the planetary gear mechanism 41, the input shaft 14b of the rotation angle sensor 14 is connected to an outer circumferential gear 42 so that they rotate together, and the pedal crankshaft 2 is connected to a sun gear 43 through gears 44 and 45. A carrier 47 for supporting planetary gears 46 for free rotation is connected to the resultant power shaft 3 through gears 48 and 49.

The gears 44 and 45 interconnecting the pedal crankshaft 2 and the sun gear 43 are formed with different numbers of teeth (diameter). The gears 48 and 49 interconnecting the resultant power shaft 3 and the carrier 47 are formed with the same number of teeth. Also, the number of teeth of the gears 48 and 49 are made different from the numbers of teeth of the gears 44 and 45.

If the numbers of teeth of the components of the planetary gear mechanism 41, and the numbers of teeth of the gears 44, 45, 48, and 49 are set so that the equation (2) below is satisfied, the input shaft 14b of the rotation angle detecting sensor 14 is stationary when no difference in rotation phase is present between the pedal crankshaft 2 and the resultant power shaft 3. However, when a difference in rotation phase occurs between the pedal crankshaft 2 and the resultant power shaft 3, the input shaft 14b of the rotation angle detecting sensor 14 rotates.

In the equation (2) below, the numbers of teeth in the planetary gear mechanism 41 are represented with symbols: ST for the sun gear 43, RT for the outer circumferential gear 42, A for the gear 44, B for the gear 45, C for the gear 48, and D for the gear 49.

$$(RT/ST) + 1 = (A/B)/(C/D) \qquad (2)$$

When it is assumed for example that, the number of teeth ST of the sun gear 43 is 20, the number of teeth of the planetary gears 46 is 20, and the number of teeth RT of the outer circumferential gear 42 is 60, the numbers of teeth of the above-mentioned four gears 44 (A), 45 (B), 48 (C), and 49 (D) according to the equation (2) above become as shown in the table 3 below.

Table 3

|  | A | B | C | D |
|---|---|---|---|---|
| Ex. 1 | 48 | 12 | 30 | 30 |
| Ex. 2 | 56 | 14 | 35 | 35 |
| Ex. 3 | 64 | 16 | 40 | 40 |

Also with the constitution of the power unit 1 shown in FIG. 18, the human power for driving the vehicle body is transmitted from the pedal crankshaft 2 to the resultant power shaft 3 through the one-way clutch 25 and the elastic members 4, and the planetary gear mechanism 41 connected to the pedal crankshaft 2 and the resultant power shaft 3 rotates as interlocked with both shafts 2 and 3.

The input shaft 14b of the rotation angle detecting sensor 14 does not rotate when the pedal crankshaft 2 rotates in phase with the resultant power shaft 3. When the pedal crankshaft 2 rotates out of phase of the resultant power shaft 3, the input shaft 14b rotates by an angle commensurate with the phase difference.

Also in this embodiment like the embodiments described so far, since great forces for driving the vehicle body are not transmitted to the planetary gear mechanism 41 for detecting the human power, the components of the planetary gear mechanism 41 may have lower strengths than in conventional arrangements. As a result, the components of the planetary gear mechanism 41 may be made of light, inexpensive materials such as plastics. This makes it possible to provide the power unit 1 at a reduced cost, and in reduced size and weight.

The human power detecting means 11 for the electric motor-assisted bicycle shown in FIG. 19 is constituted that a planetary gear mechanism 51 is mesh-connected to the pedal crankshaft 2 and the resultant power shaft 3, and the rotation angle detecting sensor 14 is connected to both of the shafts 2 and 3 through the planetary gear mechanism 51. In the planetary gear mechanism 51, the input shaft 14b of the rotation angle sensor 14 is connected to a carrier 53 supporting planetary gears 52 for free rotation so that they rotate together, and the pedal crankshaft 2 is connected to a sun gear 54 through gears 55 and 56. The resultant power shaft 3 is connected to an outer circumferential gear 57 through gears 58 and 59.

The gears 55 and 56 interconnecting the pedal crankshaft 2 and the sun gear 54 are formed with different numbers of teeth (different diameters). The gears 58 and 59 interconnecting the resultant power shaft 3 and the outer circumferential gear 57 are formed with the same number of teeth. Also, the number of teeth of the gears 58 and 59 is made different from the numbers of teeth of the gears 55 and 56.

If the numbers of teeth of the components of the planetary gear mechanism 51, and the numbers of teeth of the gears 55, 56, 58, and 59 are set so that the equation (3) below is satisfied, the input shaft 14b of the rotation angle detecting sensor 14 is stationary when no difference in rotation phase occurs between the pedal crankshaft 2 and the resultant power shaft 3. However, when a difference in rotation phase occurs between the pedal crankshaft 2 and the resultant power shaft 3, the input shaft 14b of the rotation angle detecting sensor 14 rotates.

In the equation (3) below, the numbers of teeth of gears in the planetary gear mechanism 41 are represented with symbols: ST for the sun gear 54, RT for the outer circumferential gear 57, A for the gear 55, B for the gear 56, C for the gear 58, and D for the gear 59.

$$(RT/ST) = (A/B)/(C/D) \qquad (3)$$

When it is assumed for example that, the number of teeth ST of the sun gear 54 is 20, the number of teeth of the planetary gears 52 is 20, and the number of teeth RT of the outer circumferential gear 57 is 60, the numbers of teeth of the above-mentioned four gears 55 (A), 56 (B), 58 (C), and 59 (D) according to the equation (3) above become as shown in the table 4 below.

Table 4

|       | A  | B  | C  | D  |
|-------|----|----|----|----|
| Ex. 1 | 36 | 12 | 30 | 30 |
| Ex. 2 | 54 | 18 | 45 | 45 |
| Ex. 3 | 72 | 24 | 60 | 60 |
| Ex. 4 | 90 | 30 | 75 | 75 |

Also with the constitution of the power unit 1 shown in FIG. 19, the human power for driving the vehicle body is transmitted from the pedal crankshaft 2 to the resultant power shaft 3 through the one-way clutch 25 and the elastic members 4, and the planetary gear mechanism 51 connected to the pedal crankshaft 2 and the resultant power shaft 3 rotates as interlocked with both shafts 2 and 3.

The input shaft 14b of the rotation angle detecting sensor 14 does not rotate when the pedal crankshaft 2 rotates in phase with the resultant power shaft 3. When the pedal crankshaft 2 rotates out of phase of the resultant power shaft 3, the input shaft 14b rotates by an angle commensurate with the phase difference.

Also in this embodiment like the embodiments described so far, since great forces for driving the vehicle body are not transmitted to the planetary gear mechanism 51 for detecting the human power, the components of the planetary gear mechanism 51 may have lower strengths than in conventional arrangements. As a result, the components of the planetary gear mechanism 51 may be made of light, inexpensive materials such as plastics. This makes it possible to provide the power unit 1 at a reduced cost, and in reduced size and weight.

Furthermore, since the human power detecting means 11 of the sixth embodiment constituted as shown in FIGs. 17 to 19 requires only one of the planetary gear mechanisms 31, 41, and 51 for detecting the difference in phase between the pedal crankshaft 2 and the resultant power shaft 3, the human power detecting means 11 is lighter than that in the first to fifth embodiments, and requires a smaller mounting space. Also, since the human power detecting means 11 is made with less number of components, manufacturing cost is reduced.

While examples of components of the planetary gear mechanism made of plastic materials are described in the first to sixth embodiments, instead of making all of the components of plastic materials, only the shaft portion may be made of a metallic material. Or, the components may be made of materials other than plastic such as aluminium.

While the first to sixth embodiments show an example in which the human power detecting means 11 is provided in the power unit 1 mounted on the hanger of the electric motor-assisted bicycle, the power unit 1 may be provided in the rear wheel hub of the electric motor-assisted bicycle. When such a constitution is employed, the rotary shaft on the rear wheel side of the human power drive train is used as the input member, the resultant power shaft (output member) connected to the motor in the hub and the input member are arranged on the same axial line and interconnected through elastic members. And the planetary gear mechanism is connected to the input member and the resultant power shaft.

While the first to sixth embodiments show examples of applying the electric motor-assisted vehicle of the invention to the electric motor-assisted bicycle, the invention may also be applied to other electric motor-operated vehicles such as an electric motor-operated wheelchair.

Furthermore, while the first to sixth embodiments show examples of employing the planetary gear mechanism as a planetary mechanism, the planetary gear mechanism may be replaced with a planetary roller mechanism.

According to the invention described above, the human power for driving the driven components is transmitted from the input member to the output member through the elastic members, and the pair of planetary gear mechanisms connected to the input and output members rotate as interlocked with both of the shafts. When the input member rotates in phase with the output member, no rotation is transmitted to the rotation detecting means. When the input member rotates out of phase of the output member, an amount of rotation commensurate with the phase difference is transmitted to the rotation detecting means, and an electric signal is outputted from the rotation detecting means by an amount corresponding to the magnitude of the human power.

Therefore, since a great power for propelling the driving wheel is not transmitted to the planetary mechanism, strength of the components of the planetary mechanism may be lower than in conventional planetary mechanism.

As a result, the mechanism for detecting the human power (the planetary mechanism) may be made of a lighter, less expensive material such as plastic in a compact size, so that a torque detecting device is provided at a low cost, in a light weight and a small size.

With another embodiment of the invention, components for use in the belt or chain type transmitting means and in the human power detecting means may be disposed on one same side in the vehicle width direction. This makes it possible to mount in a compact size the human power drive train components and the human power detecting mechanism on the vehicle body. Also, since the input and output members and the pair of planetary gear mechanisms are disposed collectively on one side of the vehicle body, the work of mounting those components on the vehicle body is simple.

With a further embodiment of the invention, since the elastic members and the chain sprocket for connecting the driving wheel are disposed in the axial direction of the input and output members, positioning of the chain sprocket in radial and axial directions is not restricted by the radial position of the elastic members on the input and output members.

As a result, the degree of freedom is high in designing the position in the radial and axial directions of the chain sprocket (chain line).

Since the planetary mechanism may be disposed radially more inside than the elastic members as seen in the axial direction, the mechanism is made compact by the effective use of space.

Maintenance work is simple because the chain sprocket only may be replaced without removing the output members.

Since the elastic members are disposed by utilizing part of the space for accommodating the input and output members, the human power detecting means is made in a smaller size in comparison with the constitution in which the elastic members are disposed at a position apart from the input and output members.

With a still further embodiment of the invention, the diameter of the planetary mechanism is made smaller than in the constitution in which the input and output members are disposed in the axially central area of the planetary mechanisms.

As a result, the size and weight of the torque detecting device can be further reduced.

With another embodiment of the invention, the human power for driving the driven members is transmitted from the input member to the output member through the elastic members; and the planetary mechanism connected to the input and output members rotates as interlocked with both of the members. The rotation angle detecting sensor detects the rotation angle corresponding to the phase difference between the input and output members.

Therefore, since the great force for driving the driven member is not transmitted to the planetary mechanism for detecting the human power, the strength of the components of the planetary mechanism can be smaller than in the conventional arrangements. As a result, the mechanism for detecting the human power (the planetary mechanism) may be made of lighter, less expensive materials such as plastic in a compact size, so that the torque detecting device is provided at a low cost, in a light weight and a small size.

Also, since the phase difference between the input and output members can be detected with the single planetary mechanism, weight and size are reduced in comparison with the constitution according to the above-mentioned embodiments. Manufacturing cost is also reduced.

**Claims**

1. An electric motor-assisted vehicle wherein motor power is controlled according to the magnitude of human power detected with human power detecting means (11) and the vehicle body is driven by human power and motor power, **characterized in that** an input member (2) rotated by human power and an output member (3) connectable to a driving wheel are arranged on the same axial line and interconnected through elastic members (4), and that the human power detecting means (11) is constituted such that a pair of planetary mechanisms (12,13) of the same constitution are connected to the input member (2) and to the output member (3), and the phase difference between the two members (2,3) is detected with a rotation angle detecting sensor (14).

2. Electric motor-assisted vehicle according to claim 1, **characterized in that** components in three sets of the pair of planetary mechanisms (12,13) comprising two sun wheels (12a,13a), two carriers (12d,13d) for supporting planetary wheels (12b,13b), and two outer circumferential wheels (12c,13c), components in any one set are connected to the input member (2) and to the output member (3) either coaxially and integrally, or through gears of the same diameter,

   the rest of components in two sets, two components in one set are formed integrally so that the two components rotate at the same speed, and
   two components in the other set, one component is fixed related to the vehicle body and the other component is connected to the rotation angle detecting sensor (14).

3. Electric motor-assisted vehicle according to claim 1 or 2, **characterized in that** human power is transmitted to a rear wheel through transmitting means (8) using a belt, chain (8a), or the like, disposed on one side in the vehicle width direction,

> the input member (2) and the output member (3) are disposed close to each other on the same one side as the transmitting means (8) using a belt, chain (8a), or the like, with the axes of both members (2,3) directed in the vehicle width direction, and that
> the pair of planetary mechanisms (12,13) are disposed in the vicinity of the input and output members (2,3) with the axes of the planetary mechanisms (12,13) directed in the vehicle width direction.

4. Electric motor-assisted vehicle according to claim 3, **characterized in that** elastic members (4) are interposed between the input and output members (2a,8) at positions nearly equally spaced from each other on a circle of a nearly constant radius, and an annular rotation member (8) for receiving a belt, chain (8a), or the like of the transmitting means is attached to a position that is on one of the input and output members (2a,8) connected to the transmitting means and that is superimposed over the elastic member (4) as seen in side view.

5. Electric motor-assisted vehicle according to claim 4, **characterized in that** four elastic members are disposed at four positions at approximately equal intervals on a circle of an approximately constant radius between the input member (2a) and the chain sprocket (8) as the output member and that the elastic members are compression coil springs (8).

6. Electric motor-assisted vehicle according to claim 1 or 2, **characterized in that** the input and output members (2,3) and the pair of planetary mechanisms are disposed with their axial lines parallel to each other, and the input and output members (2,3) are disposed apart from the planetary mechanisms (12,13) in the direction at right angles to the axial lines.

7. Electric motor-assisted vehicle wherein motor power is controlled according to the magnitude of human power detected with human power detecting means (11) and the vehicle body is driven by human power and motor power, **characterized in that**

> the input member (2) rotated by human power and the output member (3) connected to a driving wheel are arranged on the same axial line and interconnected through elastic members (4), the human power detecting means (11) is constituted that a planetary mechanism (31;41;51) is connected to the input and output members (2,3) and the phase difference between the two members (2,3) is detected with a rotation angle detecting sensor (14),
> one of three components of the planetary mechanism (31;41;51), namely one of a sun wheel (32;43;54), a carrier (34;47;53) for supporting planetary wheels (33;44;52), and an outer circumferential wheel (37;42;57), is connected to the rotation angle detecting sensor (14), and
> the rest of two components are connected respectively to the input and output members (2,3) through two gears of different diameters.

8. Electric motor-assisted vehicle according to at least one of the preceding claims 1 to 7, **characterized in that** an electric motor (7) is driving the output member (3) or one of the front and rear wheels.

9. Electric motor-assisted vehicle according to at least one of the preceding claims 1 to 8, **characterized in that** the vehicle is an electric motor-assisted bicycle or wheelchair.

FIG. 1

FIG. 2

FIG. 3

FIG. 4

FIG. 5

FIG. 6

FIG. 7

FIG. 8

13b

13d

12d

12b

FIG. 9

FIG. 10

FIG. 11

31

FIG. 12

FIG. 13

FIG. 14

FIG. 15

FIG. 16

EP 0 968 912 A2

FIG. 17

FIG. 18

FIG. 19